(19) **Europäisches Patentamt / European Patent Office / Office européen des brevets**

(11) **EP 4 786 640 A1**

(12) # EUROPEAN PATENT APPLICATION
published in accordance with Art. 153(4) EPC

(43) Date of publication:
**05.08.2026 Bulletin 2026/32**

(21) Application number: **24872361.1**

(22) Date of filing: **26.09.2024**

(51) International Patent Classification (IPC):
**C23C 26/00** *(2006.01)*     **C09D 5/02** *(2006.01)*
**C09D 133/00** *(2006.01)*     **C09D 133/14** *(2006.01)*
**C21D 8/12** *(2026.01)*     **H01F 1/147** *(2006.01)*
**H01F 27/245** *(2006.01)*     **H01F 41/02** *(2006.01)*
**H02K 1/18** *(2006.01)*

(52) Cooperative Patent Classification (CPC):
**C09D 5/02; C09D 133/00; C09D 133/14;**
**C23C 26/00;** C21D 8/12; H01F 1/147; H01F 27/245;
H01F 41/02; H02K 1/18

(86) International application number:
**PCT/JP2024/034363**

(87) International publication number:
**WO 2025/070576 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2023 JP 2023163623**

(71) Applicants:
• **Nippon Carbide Industries Co., Inc.**
**Tokyo 108-8466 (JP)**
• **Nippon Steel Corporation**
**Tokyo 100-8071 (JP)**

(72) Inventors:
• **OGAWA, Hiroaki**
**Namerikawa-shi, Toyama 936-8555 (JP)**
• **FUKUDA, Tatsuki**
**Namerikawa-shi, Toyama 936-8555 (JP)**
• **TAKEDA, Kazutoshi**
**Tokyo 100-8071 (JP)**
• **FUKUCHI, Minako**
**Tokyo 100-8071 (JP)**

(74) Representative: **dompatent**
**Partnerschaft von
Patentanwälten und Rechtsanwälten mbB
Deichmannhaus am Dom
Bahnhofsvorplatz 1
50667 Köln (DE)**

(54) **COATING COMPOSITION FOR LAMINATED STEEL SHEET**

(57)     The present invention provides a coating composition for a laminated steel sheet, including:
(meth)acrylic resin particles A that contain from 1% by mass to less than 20% by mass of a constituent unit derived from a monomer having a carboxy group with respect to the total constituent units of the (meth)acrylic resin particles A, and from 0.1% by mass to 7% by mass of a constituent unit derived from a monomer having a self-crosslinkable group with respect to the total constituent units thereof, and that have a glass transition temperature of 55°C or higher;
a water-soluble (meth)acrylic resin B; and
water,
in which the ratio of the mass content of the (meth)acrylic resin particles A to the mass content of the water-soluble (meth)acrylic resin B is from 95/5 to 85/15.

EP 4 786 640 A1

**Description**

Technical Field

The present disclosure relates to a coating composition for a laminated steel sheet.

Background Art

In motors, it is important to achieve a higher efficiency, and a higher output with a smaller size. Motor core materials are required to have a high magnetic permeability and a low iron loss, and the degradation of core magnetic properties becomes an issue in core processing. Further, it is becoming increasingly important for motors to generate a lower noise and a lower vibration from the viewpoint of the conservation of the living environment, and precise positioning control is required for motors. In general, a laminated steel sheet produced by layering electromagnetic steel sheets is used in a motor core.

Conventionally, methods such as welding, caulking and bolting have been used for joining electromagnetic steel sheets in the production of a laminated steel sheet. However, these joining methods are associated with the degradation of magnetic properties. In addition, it cannot be said that the laminated steel sheet produced by such a joining method has a sufficient mechanical rigidity, and therefore, there is a risk that noise and vibration may occur. To address such problems, a method of producing a laminated steel sheet using electromagnetic steel sheets (each also referred to as an "electromagnetic steel sheet with an adhesive coating") on a surface of each of which a coating that shows adhesive properties by applying heat and pressure thereto has been formed in advance, has been used in recent years. In this method, electromagnetic steel sheets with an adhesive coating that have been subjected to punching or shearing are layered, and then bonded by applying heat and pressure thereto. Since a laminated steel sheet produced using electromagnetic steel sheets with an adhesive coating shows less degradation in magnetic properties due to processing during joining and has a higher core rigidity, as compared to a laminated steel sheet produced by joining electromagnetic steel sheets by welding or the like, there is a tendency that the problem of noise and vibration is less likely to occur (see Chikara Kaidou, Kazutoshi Takeda, Takeaki Wakisaka, and Masato Mizogami, "Characteristics of Adhesive-Coating Non-oriented Electrical Steel Sheet Cores, IEEJ Transactions on Industry Application, Vol. 119, No. 7, pp. 1010 to 1015, 1999.).

As the electromagnetic steel sheet with an adhesive coating, for example, a surface-coated electromagnetic steel sheet for adhesion is disclosed, which is an electromagnetic steel sheet having on the surface thereof an insulating coating that exhibits adhesive ability by applying heat and/or pressure thereto, wherein the coating is a mixture obtained by dispersing an epoxy resin or a modified epoxy resin having a glass transition point (Tg) of from 80°C to 150°C, an epoxy resin curing agent, and a microparticulate polymer having a particle size of from 0.01 $\mu$m to 0.5 $\mu$m (see WO 2004/070080).

SUMMARY OF INVENTION

Technical Problem

In the case of producing a laminated steel sheet using electromagnetic steel sheets with an adhesive coating, first, a coating agent (also referred to as "coating agent for forming an adhesive coating") for forming an adhesive coating is coated on the surface of each of the electromagnetic steel sheets, followed by drying at a high temperature, to prepare electromagnetic steel sheets with an adhesive coating. Subsequently, the thus prepared electromagnetic steel sheets with an adhesive coating are layered, and further subjected to thermocompression bonding at a high temperature, to bond the steel sheets. Therefore, the coating agent for forming an adhesive coating is required to be capable of forming a coating film that shows a high adhesive strength under high temperature conditions at the time of bonding the electromagnetic steel sheets with an adhesive coating that have been layered.

In addition to a function as an adhesive for bonding the electromagnetic steel sheets that have been layered, the adhesive coating also needs to have a function as an insulating coating to be formed on the surface of each electromagnetic steel sheet. In general, an insulating coating is required to have electrical insulation and corrosion resistance. Therefore, the coating agent for forming an adhesive coating is required to be less likely to cause cissing and cracking in the adhesive coating to be formed, namely, required to have an excellent coatability. When the coating agent for forming an adhesive coating has an excellent coatability, the adhesive coating to be formed has an improved uniformity. Therefore, the electrical insulation and corrosion resistance are less likely to be impaired, and an improvement in the adhesive strength can also be expected.

In order to increase the adhesive strength of the adhesive coating, it is necessary to increase the cohesion of a resin used in the coating agent. However, increasing the cohesion of the resin can cause a decrease in wettability necessary for the coatability of the coating agent. Therefore, increasing the adhesive strength of the adhesive coating and improving the coatability of the coating agent for forming an adhesive coating are in a contradictory relationship, and it has been difficult to achieve both goals.

An object of one embodiment of the present disclosure is to provide a coating composition for a laminated steel sheet, which is a composition for coating the surface of an electromagnetic steel sheet to be used in the production of a laminated steel sheet, which is capable of forming a coating film that shows a high adhesive strength under high temperature conditions at the time of bonding electromagnetic steel sheets, and which has an excellent coatability.

Solution to Problem

Specific means for achieving the object include the following embodiments.

<1> A coating composition for a laminated steel sheet, the composition including:

(meth)acrylic resin particles A that contain from 1% by mass to less than 20% by mass of a constituent unit derived from a monomer having a carboxy group with respect to total constituent units of the (meth)acrylic resin particles A, and from 0.1% by mass to 7% by mass of a constituent unit derived from a monomer having a self-crosslinkable group with respect to the total constituent units, and that have a glass transition temperature of 55°C or higher; a water-soluble (meth)acrylic resin B; and water,

wherein a ratio of a mass content of the (meth)acrylic resin particles A to a mass content of the water-soluble (meth)acrylic resin B is from 95/5 to 85/15.

<2> The coating composition for a laminated steel sheet, according to <1>, wherein the water-soluble (meth)acrylic resin B contains a constituent unit derived from a monomer having a self-crosslinkable group.

<3> The coating composition for a laminated steel sheet, according to <1> or <2>, wherein the water-soluble (meth)acrylic resin B contains a constituent unit derived from a monomer having a hydroxyl group.

<4> The coating composition for a laminated steel sheet, according to any one of <1> to <3>, wherein the (meth)acrylic resin particles A have an average primary particle size of from 250 nm to 450 nm.

<5> The coating composition for a laminated steel sheet, according to any one of <1> to <4>, wherein the monomer containing a self-crosslinkable group in the (meth)acrylic resin particles A is at least one selected from the group consisting of N-methylolacrylamide (NMAM), N-butylolacrylamide (NBMA), hydroxyethyl acrylamide (HEAA), and glycidyl methacrylate (GMA).

<6> The coating composition for a laminated steel sheet, according to any one of <2> to <5>, wherein a content percentage of the constituent unit derived from a monomer having a self-crosslinkable group in the water-soluble (meth)acrylic resin B is from 0.1% by mass to 10.0% by mass with respect to total constituent units of the water-soluble (meth)acrylic resin B.

<7> The coating composition for a laminated steel sheet, according to any one of <3> to <6>, wherein a content percentage of a constituent unit derived from a monomer having a hydroxyl group in the water-soluble (meth)acrylic resin B is from 5% by mass to 30% by mass with respect to the total constituent units of the water-soluble (meth)acrylic resin B. Advantageous Effects of Invention

One embodiment of the present disclosure provides a coating composition for a laminated steel sheet, which is a composition for coating the surface of an electromagnetic steel sheet to be used in the production of a laminated steel sheet, which is capable of forming a coating film that shows a high adhesive strength under high temperature conditions at the time of bonding electromagnetic steel sheets, and which has an excellent coatability.

DESCRIPTION OF EMBODIMENTS

The coating composition for a laminated steel sheet according to the present disclosure will be described below in detail. The following description of requirements may be made based on a representative embodiment of the present disclosure. However, the present disclosure is not limited to such an embodiment, and modifications can be made as appropriate within the scope of the object of the present disclosure.

In the present disclosure, a numerical range indicated using the expression "from * to *" refers to a range that includes numerical values described before and after the preposition "to" as a lower limit value and an upper limit value, respectively.

In numerical ranges described in stages, in the present disclosure, the upper limit value or the lower limit value described in a certain numerical range may be replaced with the upper limit value or the lower limit value in another numerical range described in stages. Further, in a numerical range described in the present disclosure, the upper limit value or the lower limit value described in a certain numerical range may be replaced with a value shown in Examples.

In the present disclosure, a combination of two or more preferred embodiments is a more preferred embodiment.

In a case in which a plurality of substances corresponding to each component are present in a coating composition for a laminated steel sheet, in the present disclosure, the amount of each component in the coating composition for a laminated steel sheet refers to the total amount of the plurality of substances present in the coating composition for a laminated steel sheet, unless otherwise specified.

In the present disclosure, the term "(meth)acrylic monomer" refers to a monomer having a (meth)acryloyl group.

In the present disclosure, the term "(meth)acrylic resin" refers to a resin which contains a constituent unit derived from a (meth)acrylic monomer, and in which the proportion of the constituent unit derived from a (meth)acrylic monomer is 50% by mass or more.

In the present disclosure, the term "(meth)acrylic" is a term that encompasses both "acrylic" and "methacrylic", the term "(meth)acrylate" is a term that encompasses both "acrylate" and "methacrylate", the term "(meth)acryloyl" is a term that encompasses both "acryloyl" and "methacryloyl", and the term "(meth)acrylamide" is a term that encompasses both "acrylamide" and "methacrylamide".

In the present disclosure, the prefix "n-" refers to "normal", the prefix "i-" refers to "iso", the prefix "s-" refers to "secondary", and the prefix "t-" refers to "tertiary".

In the present disclosure, the terms "% by mass" and "% by weight" have the same meaning, and the terms "parts by mass" and "parts by weight" have the same meaning.

In the present disclosure, the term "step" not only refers to an independent step, but also includes a step that is not clearly distinguishable from another step as long as a desired object of the step is achieved.

[Coating Composition for Laminated Steel Sheet]

The coating composition for a laminated steel sheet (hereinafter, also referred to as "coating composition") according to the present disclosure includes:

(meth)acrylic resin particles A that contain from 1% by mass to less than 20% by mass of a constituent unit derived from a monomer having a carboxy group with respect to the total constituent units of the (meth)acrylic resin particles A, and from 0.1% by mass to 7% by mass of a constituent unit derived from a monomer having a self-crosslinkable group with respect to the total constituent units, and that have a glass transition temperature of 55°C or higher;
a water-soluble (meth)acrylic resin B; and
water,

wherein the ratio of the mass content of the (meth)acrylic resin particles A to the mass content of the water-soluble (meth)acrylic resin B is from 95/5 to 85/15.

The coating composition according to the present disclosure is a composition for coating the surface of an electromagnetic steel sheet to be used in the production of a laminated steel sheet, and is capable of exhibiting a high adhesive strength at a temperature equal to or higher than a specific temperature.

In general, increasing the cohesion of a resin contained in a coating agent in order to increase the adhesive strength of the resulting coating film can cause a decrease in the wettability necessary for the coatability of the coating agent. In contrast, the coating composition according to the present disclosure achieved both a high adhesive strength of the coating film and an excellent coatability of the coating composition, by including the (meth)acrylic resin particles A that ensure the cohesion and the water-soluble (meth)acrylic resin B that ensures the wettability at a specific ratio. The coating composition according to the present disclosure is capable of forming a coating film that shows a high adhesive strength, because the coating composition includes the (meth)acrylic resin particles A which contain specific proportions of a carboxy group that contributes to crosslinking and a self-crosslinkable group, and which have a high cohesion. Further, the coating composition according to the present disclosure is capable of allowing the resulting coating film to exhibit adhesive strength under high temperature conditions at the time of bonding electromagnetic steel sheets, because the (meth)acrylic resin particles A have a self-crosslinkable group that exhibits self-crosslinkability at a temperature equal to or higher than a specific temperature. In addition, since the coating composition according to the present disclosure includes the (meth)acrylic resin particles A and the water-soluble (meth)acrylic resin B in combination, the coating composition has a better wettability to an electromagnetic steel sheet as compared to the case of containing the (meth)acrylic resin particles A singly. This leads to an increase in the area of adhesion to the electromagnetic steel sheet, making it possible to increase the adhesive strength of the coating film to be formed.

Therefore, the coating composition according to the present disclosure is capable of forming a coating film that shows a high adhesive strength under high temperature conditions at the time of bonding electromagnetic steel sheets, and has an excellent coatability.

The coating composition according to the present disclosure also has advantages that no curing agent is required in order to obtain adhesive strength, and has a long pot life. For example, a treatment liquid (namely, coating agent) to be used for the production of the surface-coated electromagnetic steel sheet for adhesion, disclosed in WO 2004/070080, uses an epoxy resin, and thus, it is necessary to incorporate a curing agent in order to obtain adhesive strength. Although a coating agent incorporating a curing agent tends to have a shorter pot life, a decrease in the pot life due to incorporating a curing agent is less likely to occur in the coating composition according to the present disclosure.

In the present disclosure, the "(meth)acrylic resin particles A that contain from 1% by mass to less than 20% by mass of a constituent unit derived from a monomer having a carboxy group with respect to the total constituent units of the (meth)acrylic resin particles A, and from 0.1% by mass to 7% by mass of a constituent unit derived from a monomer having a self-crosslinkable group with respect to the total constituent units, and that have a glass transition temperature of 55°C or higher" is also referred to as "specific (meth)acrylic resin particles A".

[Specific (Meth)acrylic Resin Particles A]

The coating composition according to the present disclosure includes (meth)acrylic resin particles A that contain from 1% by mass to less than 20% by mass of a constituent unit derived from a monomer having a carboxy group with respect to the total constituent units of the (meth)acrylic resin particles A, and from 0.1% by mass to 7% by mass of a constituent unit derived from a monomer having a self-crosslinkable group with respect to the total constituent units, and that have a glass transition temperature of 55°C or higher.

The coating composition according to the present disclosure may include only one kind of the specific (meth)acrylic resin particles A, or two or more kinds thereof.

In the coating composition according to the present disclosure, the specific (meth)acrylic resin particles A are present in a state dispersed in a medium containing water.

< Constituent Unit Derived from Monomer Having Carboxy Group >

The specific (meth)acrylic resin particles A contain from 1% by mass to less than 20% by mass of a constituent unit derived from a monomer having a carboxy group with respect to the total constituent units of the specific (meth)acrylic resin particles A.

In the present disclosure, the "constituent unit derived from a monomer having a carboxy group" refers to a constituent unit formed by the addition polymerization of a monomer having a carboxy group.

The monomer having a carboxy group may be, for example, a monomer having at least one carboxy group and ethylenically unsaturated group within one molecule.

The ethylenically unsaturated group is not particularly limited, and examples thereof include vinyl group, allyl group, vinylphenyl group, (meth)acrylamide group, and (meth)acryloyl group.

The ethylenically unsaturated group is preferably a (meth)acryloyl group.

Specific examples of the monomer having a carboxy group include (meth)acrylic acid, crotonic acid, maleic acid, fumaric acid, itaconic acid, glutaconic acid, citraconic acid, ω-carboxy-polycaprolactone mono(meth)acrylate [such as ω-carboxy-polycaprolactone (n ≈ 2) monoacrylate], and succinic acid derivatives (such as 2-acryloyloxyethyl-succinic acid).

The monomer having a carboxy group preferably includes a (meth)acrylic monomer having a carboxy group, and is more preferably a (meth)acrylic monomer having a carboxy group. The (meth)acrylic monomer having a carboxy group is preferably (meth)acrylic acid, and more preferably methacrylic acid.

The specific (meth)acrylic resin particles A may contain only one kind of the constituent unit derived from a monomer having a carboxy group, or two or more kinds thereof.

The content percentage of the constituent unit derived from a monomer having a carboxy group, in the specific (meth)acrylic resin particles A, is from 1% by mass to less than 20% by mass with respect to the total constituent units of the specific (meth)acrylic resin particles A.

When the content percentage of the constituent unit derived from a monomer having a carboxy group, in the specific (meth)acrylic resin particles A, is 1% by mass or more with respect to the total constituent units of the specific (meth)acrylic resin particles A, there is a tendency that a coating film that shows a high adhesive strength under high temperature conditions at the time of bonding electromagnetic steel sheets can be formed. From such a point of view, the content percentage of the constituent unit derived from a monomer having a carboxy group, in the specific (meth)acrylic resin particles A, is preferably 3% by mass or more, more preferably 5% by mass or more, still more preferably 8% by mass or more, and particularly preferably 10% by mass or more, with respect to the total constituent units of the specific (meth)acrylic resin particles A.

When the content percentage of the constituent unit derived from a monomer having a carboxy group, in the specific (meth)acrylic resin particles A, is less than 20% by mass with respect to the total constituent units of the specific (meth)acrylic resin particles A, there is a tendency that a coating film that shows a high adhesive strength under high temperature conditions at the time of bonding electromagnetic steel sheets can be formed. From such a point of view, the content percentage of the constituent unit derived from a monomer having a carboxy group, in the specific (meth)acrylic resin particles A, is preferably 18% by mass or less, and more preferably 15% by mass or less, with respect to the total constituent units of the specific (meth)acrylic resin particles A.

In a certain embodiment, the content percentage of the constituent unit derived from a monomer having a carboxy group, in the specific (meth)acrylic resin particles A, may be within the range of from 5% by mass to less than 20% by mass, within the range of from 8% by mass to less than 20% by mass, within the range of from 10% by mass to less than 20% by mass, within the range of from 8% by mass to 18% by mass, or within the range of from 10% by mass to 15% by mass.

< Constituent Unit Derived from Monomer Having Self-Crosslinkable Group >

The specific (meth)acrylic resin particles A contain from 0.1% by mass to 7% by mass of a constituent unit derived from a monomer having a self-crosslinkable group with respect to the total constituent units of the specific (meth)acrylic resin particles A.

In the present disclosure, the "constituent unit derived from a monomer having a self-crosslinkable group" refers to a constituent unit formed by the addition polymerization of a monomer having a self-crosslinkable group.

In the present disclosure, the "self-crosslinkability" refers to a capability to form a crosslink without the presence of a crosslinker.

The self-crosslinkable group in the present disclosure is capable of exhibiting the self-crosslinkability by applying heat thereto.

The temperature at which the self-crosslinkable group exhibits the self-crosslinkability varies depending on the type of the self-crosslinkable group.

The self-crosslinkable group can be a group that is less likely to exhibit the self-crosslinkability at a temperature at which the coating composition is coated on the surface of an electromagnetic steel sheet and dried, and that exhibits the self-crosslinkability at a temperature at which the electromagnetic steel sheets are bonded. The temperature at which the self-crosslinkable group exhibits the self-crosslinkability is not particularly limited.

Specific examples of the self-crosslinkable group include N-methylol group, N-butylol group, glycidyl group, and alkoxymethylamide groups.

The self-crosslinkable group is preferably at least one selected from the group consisting of N-methylol group, N-butylol group, and glycidyl group.

Specific examples of the monomer having a self-crosslinkable group include N-hydroxyalkyl(meth)acrylamides, N,N-dihydroxyalkyl(meth)acrylamides, glycidyl (meth)acrylate, and N-alkoxymethyl(meth)acrylamides.

Examples of the N-hydroxyalkyl(meth)acrylamide include N-methylolacrylamide (NMAM), N-butylolacrylamide (NBMA), and hydroxyethyl acrylamide (HEAA).

Examples of the N,N-dihydroxyalkyl(meth)acrylamide include dimethylol(meth)acrylamide.

Examples of the N-alkoxymethyl(meth)acrylamide include N-methoxymethyl(meth)acrylamide, N-ethoxymethyl(meth)acrylamide, and N-butoxymethyl(meth)acrylamide.

The monomer having a self-crosslinkable group is preferably at least one selected from the group consisting of N-methylolacrylamide (NMAM), N-butylolacrylamide (NBMA), hydroxyethyl acrylamide (HEAA) and glycidyl methacrylate (GMA), more preferably includes hydroxyethyl acrylamide (HEAA), and is still more preferably hydroxyethyl acrylamide (HEAA).

The specific (meth)acrylic resin particles A may contain only one kind of the constituent unit derived from a monomer having a self-crosslinkable group, or two or more kinds thereof.

The content percentage of the constituent unit derived from a monomer having a self-crosslinkable group, in the specific (meth)acrylic resin particles A, is from 0.1% by mass to 7% by mass with respect to the total constituent units of the specific (meth)acrylic resin particles A.

The fact that the content percentage of the constituent unit derived from a monomer having a self-crosslinkable group, in the specific (meth)acrylic resin particles A, is 0.1% by mass or more with respect to the total constituent units of the specific (meth)acrylic resin particles A means that the specific (meth)acrylic resin particles A actively contain the constituent unit derived from a monomer having a self-crosslinkable group.

The content percentage of the constituent unit derived from a monomer having a self-crosslinkable group, in the specific (meth)acrylic resin particles A, is preferably 0.5% by mass or more, more preferably 1% by mass or more, and still more preferably 1.5% by mass or more, with respect to the total constituent units of the specific (meth)acrylic resin particles A.

When the content percentage of the constituent unit derived from a monomer having a self-crosslinkable group, in the specific (meth)acrylic resin particles A, is 7% by mass or less with respect to the total constituent units of the specific (meth)acrylic resin particles A, there is a tendency that a coating film that shows a high adhesive strength under high temperature conditions at the time of bonding electromagnetic steel sheets can be formed. From such a point of view, the content percentage of the constituent unit derived from a monomer having a self-crosslinkable group, in the specific (meth) acrylic resin particles A, is preferably 6% by mass or less, and more preferably 5% by mass or less, with respect to the total constituent units of the specific (meth)acrylic resin particles A.

In a certain embodiment, the content percentage of the constituent unit derived from a monomer having a self-crosslinkable group, in the specific (meth)acrylic resin particles A, may be within the range of from 0.1% by mass to 6% by mass, within the range of from 0.1% by mass to 5% by mass, within the range of from 1% by mass to 7% by mass, within the range of from 1.5% by mass to 6% by mass, or within the range of from 1.9% by mass to 5% by mass.

< Constituent Unit Derived from (Meth)acrylic Acid Alkyl Ester Monomer >

The specific (meth)acrylic resin particles A preferably contain a constituent unit derived from a (meth)acrylic acid alkyl ester monomer.

In the present disclosure, the "constituent unit derived from a (meth)acrylic acid alkyl ester monomer" refers to a constituent unit formed by the addition polymerization of a (meth)acrylic acid alkyl ester monomer. The definition of the "(meth)acrylic acid alkyl ester monomer" in the specific (meth)acrylic resin particles A does not encompass a monomer corresponding to the monomer having a carboxy group, and a monomer corresponding to the monomer having a self-crosslinkable group.

The type of the (meth)acrylic acid alkyl ester monomer is not particularly limited.

The (meth)acrylic acid alkyl ester monomer may be an acrylic acid alkyl ester monomer, or a methacrylic acid alkyl ester monomer.

The alkyl group contained in the (meth)acrylic acid alkyl ester monomer may be unsubstituted, or may have a substituent (however, excluding a carboxy group, a self-crosslinkable group, and a hydroxyl group), but is preferably unsubstituted.

The alkyl group contained in the (meth)acrylic acid alkyl ester monomer may be linear, branched, or cyclic.

The alkyl group contained in the (meth)acrylic acid alkyl ester monomer preferably has, for example, from 1 to 18 carbon atoms, more preferably from 1 to 12 carbon atoms, and still more preferably from 1 to 8 carbon atoms.

Specific examples of the (meth)acrylic acid alkyl ester monomer include methyl (meth)acrylate, ethyl (meth)acrylate, n-butyl (meth)acrylate, i-butyl (meth)acrylate, s-butyl (meth)acrylate, t-butyl (meth)acrylate, n-octyl (meth)acrylate, i-octyl (meth)acrylate, 2-ethylhexyl (meth)acrylate, n-nonyl (meth)acrylate, i-nonyl (meth)acrylate, n-decyl (meth)acrylate, stearyl (meth)acrylate, lauryl (meth)acrylate, cyclohexyl (meth)acrylate, and isobornyl (meth)acrylate.

The (meth)acrylic acid alkyl ester monomer preferably includes at least one selected from the group consisting of n-butyl acrylate, methyl methacrylate and 2-ethylhexyl acrylate, and is more preferably at least one selected from the group consisting of n-butyl acrylate, methyl methacrylate, and 2-ethylhexyl acrylate.

In a case in which the specific (meth)acrylic resin particles A contain a constituent unit derived from a (meth)acrylic acid alkyl ester monomer, the specific (meth)acrylic resin particles A may contain only one kind of the constituent unit derived from a (meth)acrylic acid alkyl ester monomer, or two or more kinds thereof.

In a case in which the specific (meth)acrylic resin particles A contain a constituent unit derived from a (meth)acrylic acid alkyl ester monomer, the content percentage of the constituent unit derived from a (meth)acrylic acid alkyl ester monomer is not particularly limited. However, for example, the content percentage thereof is preferably from 50% by mass to 98% by mass, more preferably from 50% by mass to 85% by mass, and still more preferably from 50% by mass to 70% by mass, with respect to the total constituent units of the specific (meth)acrylic resin particles A.

The fact that the content percentage of the constituent unit derived from a (meth)acrylic acid alkyl ester monomer, in the specific (meth)acrylic resin particles A, is 50% by mass or more with respect to the total constituent units of the specific (meth)acrylic resin particles A means that the specific (meth)acrylic resin particles A contain the constituent unit derived from a (meth)acrylic acid alkyl ester monomer as a main component of the constituent units constituting the specific (meth)acrylic resin particles A.

< Constituent Unit Derived from Another Monomer >

The specific (meth)acrylic resin particles A may contain a constituent unit derived from a monomer (namely, another monomer) that does not correspond to any of the monomer having a carboxy group, the monomer having a self-crosslinkable group, and the (meth)acrylic acid alkyl ester monomer.

In the present disclosure, the "constituent unit derived from another monomer" refers to a constituent unit formed by the addition polymerization of another monomer.

The constituent unit derived from another monomer may be, for example, a constituent unit derived from styrene. When the specific (meth)acrylic resin particles A contain a constituent unit derived from styrene, it is possible to impart glossiness to the coating film to be formed.

Further, examples of the constituent unit derived from another monomer include: constituent units derived from (meth)acrylates having an aromatic ring, represented by benzyl(meth)acrylate and phenoxyethyl (meth)acrylate; constituent units derived from alkoxyalkyl (meth)acrylates represented by methoxyethyl (meth)acrylate and ethoxyethyl (meth)acrylate; constituent units derived from vinyl cyanides represented by acrylonitrile and methacrylonitrile; and constituent units derived from vinyl esters represented by vinyl formate, vinyl acetate, vinyl propionate and vinyl versatate.

In a case in which the specific (meth)acrylic resin particles A contain a constituent unit derived from another monomer, the specific (meth)acrylic resin particles A may contain only one kind of the constituent unit derived from another monomer, or two or more kinds thereof.

In a case in which the specific (meth)acrylic resin particles A contain a constituent unit derived from another monomer, the content percentage of the constituent unit derived from another monomer can be set as appropriate, to the extent that the effects of the coating composition according to the present disclosure are not impaired.

<< Glass Transition Temperature of Specific (Meth)acrylic Resin Particles A >>

The glass transition temperature (also referred to as "Tg") of the specific (meth)acrylic resin particles A is 55°C or higher.

When the glass transition temperature of the specific (meth)acrylic resin particles A is 55°C or higher, there is a tendency that a coating film that shows a high adhesive strength under high temperature conditions at the time of bonding electromagnetic steel sheets can be formed. From such a point of view, the glass transition temperature of the specific (meth)acrylic resin particles A is preferably 60°C or higher, more preferably 65°C or higher, and still more preferably 70°C or higher.

The upper limit of the glass transition temperature of the specific (meth)acrylic resin particles A is not particularly limited, but is preferably, for example, 80°C or lower.

In a certain embodiment, the glass transition temperature of the specific (meth)acrylic resin particles A may be from 55°C to 80°C, from 60°C to 80°C, from 65°C to 80°C, or from 70°C to 80°C.

The glass transition temperature of the specific (meth)acrylic resin particles A is a value measured by the following method, using a differential scanning calorimeter (a device for use in differential scanning calorimetry (DSC)).

An aqueous dispersion of the specific (meth)acrylic resin particles A is coated on a release paper using a 4-mil (101.6 $\mu$m) applicator. Subsequently, the coated aqueous dispersion of the specific (meth)acrylic resin particles A is dried (drying temperature: 105°C, drying time: 10 minutes), to obtain a dried product of the specific (meth)acrylic resin particles A. A quantity of 10 mg of the resulting dried product is filled into an aluminum sample pan [such as Tzero Pan (trade name) manufactured by TA Instruments Inc.], and the sample pan is sealed with an aluminum lid [such as Tzero Hermetic Lid (trade name) manufactured by TA Instruments Inc.]. Thereafter, the glass transition temperature is measured using a differential scanning calorimeter, under the following measurement conditions. In this measurement, the glass transition temperature is defined as the temperature at the intersection of a straight line obtained by extending a baseline on a low temperature side to a high temperature side, with a tangent line drawn at a point where the gradient of a curve of a portion at which the glass transition changes in a stepwise manner is maximized, in the resulting DSC curve.

For example, it is possible to use a differential scanning calorimeter (trade name: Discovery DSC 2500) manufactured by TA Instruments Japan Ltd., as the differential scanning calorimeter. However, the differential scanning calorimeter is not limited thereto.

- Measurement Conditions -

Ambient condition: In the atmosphere
Measurement temperature range: From -90°C to 100°C
Heating rate: 10°C/min
Standard reference: Empty sample pan

The glass transition temperature of the specific (meth)acrylic resin particles A can be adjusted as appropriate, for example, by using two or more kinds of monomers whose homopolymers have different glass transition temperatures.

<< Average Primary Particle Size of Specific (Meth)acrylic Resin Particles A >>

The average primary particle size of the specific (meth)acrylic resin particles A is not particularly limited. However, for example, the average primary particle size is preferably from 200 nm to 450 nm, more preferably from 230 nm to 450 nm, still preferably from 250 nm to 450 nm, and particularly preferably from 280 nm to 400 nm, from the viewpoint of the production stability of the specific (meth)acrylic resin particles A.

The average primary particle size of the specific (meth)acrylic resin particles A can be controlled, for example, by adjusting the amount of surfactant to be used in the production of the specific (meth)acrylic resin particles A. For example, there are tendencies that a large amount of surfactant to be used in the production of the specific (meth)acrylic resin particles A leads to a decrease in the particle size of the specific (meth)acrylic resin particles A, and a small amount of surfactant leads to an increase in the particle size.

The average primary particle size of the specific (meth)acrylic resin particles A refers to a volume average primary particle size. The average primary particle size of the specific (meth)acrylic resin particles A is a value measured by a dynamic light scattering method described in "New Lectures on Experimental Chemistry 4, Basic Technology 3, Light (II)", edited by the Chemical Society of Japan, pages from 725 to 741 [published by Maruzen Co., Ltd., July 20, 1976], using a particle size distribution measuring apparatus. The specific method is shown below.

A quantity of 5 mL of a dispersion of the specific (meth)acrylic resin particles A is collected using a Pasteur pipette and introduced into a 10 mm-square glass cell, and the cell is set in a particle size distribution measuring apparatus. The value of an attenuator is set to x8 (8 times), and the concentration of the dispersion of the specific (meth)acrylic resin particles A is adjusted so as to achieve an attenuation count rate of from 150 kCps to 200 kCps. Using the dispersion of the specific (meth)acrylic resin particles A whose concentration has been adjusted, the particle size distribution of the specific (meth)acrylic resin particles A is measured under the conditions of a measurement temperature of 25°C and a light scattering angle of 90°. The thus obtained measurement results are processed by computer to determine the average primary particle size of the specific (meth)acrylic resin particles A. Specifically, the particle size at a cumulative value of 50% (based on volume) in the resulting particle size distribution is defined as the volume average primary particle size.

For example, "ZETASIZER NANO ZS-90" manufactured by Malvern Panalytical can be used as the particle size distribution measuring apparatus. However, the particle size distribution measuring apparatus is not particularly limited thereto.

<< Content Percentage of Specific (Meth)acrylic Resin Particles A >>

The content percentage of the specific (meth)acrylic resin particles A in the coating composition according to the present disclosure is not particularly limited. However, for example, the content percentage thereof is preferably from 85% by mass to 95% by mass, more preferably from 87% by mass to 93% by mass, and still preferably from 89% by mass to 91% by mass, with respect to the total solid content in the coating composition.

In the present disclosure, the "total solid content in the coating composition" refers to the mass of the residue obtained after the removal of solvent from the coating composition. In the present disclosure, the "solvent" refers to water and an organic solvent.

[Method of Producing Specific (Meth)acrylic Resin Particles A]

The method of producing the specific (meth)acrylic resin particles A is not particularly limited, as long as the specific (meth)acrylic resin particles A previously described can be produced.

The specific (meth)acrylic resin particles A can be produced, for example, by an emulsion polymerization method.

Examples of the emulsion polymerization method for producing the specific (meth)acrylic resin particles A include the following methods [1] to [3]. In the following description, the monomers forming the constituent units of the specific (meth)acrylic resin particles A are also referred to as "monomer component A".

[1] A method in which the monomer component A, a surfactant and water are introduced into a reactor equipped with a thermometer, a stirrer, a raw material introduction pipe, a reflux condenser, a nitrogen introduction pipe and the like, the resulting mixture is heated with stirring under a nitrogen gas stream, and then a polymerization initiator, a reducing agent and the like are added thereto, if appropriate, to allow the emulsion polymerization reaction to proceed (so-called batch process).

[2] A method in which at least a surfactant and water are introduced into a reactor equipped with a thermometer, a stirrer, a raw material introduction pipe, a reflux condenser, a nitrogen introduction pipe and the like, the resulting mixture is heated with stirring under a nitrogen gas stream, then the monomer component A is added dropwise, and a polymerization initiator, a reducing agent and the like are added thereto, if appropriate, to allow the emulsion polymerization reaction to proceed (so-called monomer dropping method).

[3] A method as described below. Specifically, in a separate container, the monomer component A is emulsified in advance, using at least a surfactant and water, to prepare a pre-emulsion. A portion of the pre-emulsion and water are introduced into a reactor equipped with a thermometer, a stirrer, a raw material introduction pipe, a reflux condenser, a nitrogen introduction pipe and the like, and the resulting mixture is heated with stirring under a nitrogen gas stream. After the temperature in the reactor has stabilized, the remaining pre-emulsion is added dropwise into the reactor, while adding a polymerization initiator, a reducing agent and the like dropwise, if appropriate, to allow the emulsion polymerization reaction to proceed (so-called monomer emulsion dropping method).

Of these methods, the monomer emulsion dropping method [3] described above is preferred as the emulsion polymerization method for producing the specific (meth)acrylic resin particles A.

The monomer component A includes a monomer having a carboxy group.

The details of the monomer having a carboxy group are as previously described.

The monomer component A may include only one kind of the monomer having a carboxy group, or two or more kinds thereof.

The amount of the monomer having a carboxy group to be used is preferably, for example, within the range of from 1 part by mass to less than 20 parts by mass with respect to 100 parts by mass of the total amount of the monomer component A.

The monomer component A includes a monomer having a self-crosslinkable group.

The details of the monomer having a self-crosslinkable group are as previously described.

The monomer component A may include only one kind of the monomer having a self-crosslinkable group, or two or more kinds thereof.

The amount of the monomer having a self-crosslinkable group to be used is preferably, for example, within the range of from 0.1 parts by mass to 7 parts by mass with respect to 100 parts by mass of the total amount of the monomer component A.

The monomer component A preferably includes a (meth)acrylic acid alkyl ester monomer.

The details of the (meth)acrylic acid alkyl ester monomer are as previously described.

In a case in which the monomer component A includes a (meth)acrylic acid alkyl ester monomer, the monomer component A may include only one kind of the (meth)acrylic acid alkyl ester monomer, or two or more kinds thereof.

In the case of using a (meth)acrylic acid alkyl ester monomer, the amount of the (meth)acrylic acid alkyl ester monomer to be used is preferably, for example, within the range of from 50 parts by mass to 98 parts by mass with respect to 100 parts by mass of the total amount of the monomer component A.

The monomer component A may include another monomer such as styrene.

The details of the other monomer such as styrene are as previously described.

In the case of using styrene, the amount of styrene to be used is preferably, for example, within the range of from 10 parts by mass to 48 parts by mass with respect to 100 parts by mass of the total amount of the monomer component A.

The surfactant is not particularly limited.

The surfactant may be an anionic surfactant, a cationic surfactant, an amphoteric surfactant or a nonionic surfactant, and may be a combination of any of these surfactants. The surfactant is preferably, for example, an anionic surfactant and/or a nonionic surfactant, and more preferably an anionic surfactant and a nonionic surfactant, from the viewpoint of the production stability of the specific (meth)acrylic resin particles A.

Examples of the anionic surfactant include: polyoxyalkylene polycyclic phenyl ether sulfuric acid ester salts represented by polyoxyethylene distyrenated phenyl ether ammonium sulfate ester; polyoxyalkylene polycyclic phenyl ether sulfuric acid salts represented by polyoxyethylene distyrenated phenyl ether ammonium sulfate; polyoxyalkylene alkyl phenyl ether sulfuric acid salts represented by polyoxyethylene nonyl phenyl ether sodium sulfate; polyoxyalkylene alkyl ether sulfuric acid ester salts represented by sodium polyoxyethylene lauryl ether sulfate; polyoxyalkylene alkyl ether sulfuric acid salts; and alkyl phosphoric acid ester salts.

Examples of the nonionic surfactant include: polyoxyalkylene alkyl ethers represented by polyoxyethylene oleyl ether and polyoxyethylene lauryl ether; as well as polyoxyalkylene styrenated phenyl ethers represented by polyoxyethylene styrenated phenyl ether.

In the emulsion polymerization method for producing the specific (meth)acrylic resin particles A, only one kind of the surfactant may be used, or two or more kinds thereof may be used.

The amount of the surfactant to be used in the emulsion polymerization method for producing the specific (meth)acrylic resin particles A is not particularly limited. However, for example, the amount of the surfactant is preferably from 1.5 parts by mass to 10.0 parts by mass with respect to 100 parts by mass of the total amount of the monomer component A.

The polymerization initiator is not particularly limited as long as the polymerization initiator can be used in a usual emulsion polymerization.

The polymerization initiator may be, for example, a persulfate salt, an organic peroxide or an azo compound.

Specific examples of the persulfate salt include ammonium persulfate (also referred to as "ammonium peroxodisulfate"), sodium persulfate, and potassium persulfate.

Specific examples of the organic peroxide include t-butyl hydroperoxide, benzoyl peroxide, lauroyl peroxide, caproyl peroxide, di-i-propyl peroxydicarbonate, di-2-ethylhexyl peroxydicarbonate, and t-butyl peroxypivalate.

Specific examples of the azo compound include 2,2'-azobisisobutyronitrile, 2,2'-azobis(2,4-dimethylvaleronitrile), 2,2'-azobis(4-methoxy-2,4-dimethylvaleronitrile), 1,1'-azobis(cyclohexane-1-carbonitrile), and 2,2'-azobis(isobutyric acid)dimethyl.

In the emulsion polymerization method for producing the specific (meth)acrylic resin particles A, only one kind of the polymerization initiator may be used, or two or more kinds thereof may be used.

The amount of the polymerization initiator to be used in the emulsion polymerization method for producing the specific (meth)acrylic resin particles A is not particularly limited. However, for example, the amount of the polymerization initiator is preferably from 0.2 parts by mass to 1.0 parts by mass with respect to 100 parts by mass of the total amount of the monomer component A.

In the emulsion polymerization method for producing the specific (meth)acrylic resin particles A, a reducing agent may be used along with the polymerization initiator.

Specific examples of the reducing agent include sodium metabisulphite, sodium sulfite, sodium hydrogen sulfite, sodium pyrosulfite, sodium pyrophosphate, sodium hydroxymethanesulfinate, thioglycolic acid, and sodium thiosulfate.

In the case of using a reducing agent in the emulsion polymerization method for producing the specific (meth)acrylic resin particles A, only one kind of the reducing agent may be used, or two or more kinds thereof may be used.

In the case of using a reducing agent, the amount of the reducing agent to be used in the emulsion polymerization method for producing the specific (meth)acrylic resin particles A is not particularly limited. However, for example, the amount of the reducing agent is preferably from 0.2 parts by mass to 1.0 part by mass with respect to 100 parts by mass of the total amount of the monomer component A.

The emulsion polymerization method for producing the specific (meth)acrylic resin particles A is carried out, for example, at a polymerization temperature of from 50°C to 80°C, and preferably from 60°C to 70°C. Further, the emulsion polymerization method is carried out, for example, for a polymerization time of from 5 hours to 9 hours, and preferably from 6 hours to 8 hours.

[Water-Soluble (Meth)acrylic Resin B]

The coating composition according to the present disclosure includes a water-soluble (meth)acrylic resin B.

The coating composition according to the present disclosure may include only one kind of the water-soluble (meth)acrylic resin B, or two or more kinds thereof.

In the coating composition according to the present disclosure, the water-soluble (meth)acrylic resin B is present in a state dissolved in a medium containing water.

In the present disclosure, the "water-soluble (meth)acrylic resin" refers to a (meth)acrylic resin in which a resin film obtained therefrom has a haze value as measured by the following method of 3.0 or less.

The solid concentration of the (meth)acrylic resin is adjusted to 30% by mass using water, to prepare a sample liquid. The sample liquid is coated on one surface of a substrate using a bar coater to a film thickness after drying of 2 $\mu$m, thereby forming a coating film. Subsequently, the thus formed coating film is dried at 100°C for one minute, to obtain a resin film with a PET film. The haze of the resulting resin film with a PET film is measured using a haze meter. The haze value of the PET film is subtracted from the thus measured haze value, to determine the haze value of the resin film.

A polyethylene terephthalate (PET) film is suitable as the substrate. For example, it is possible to use "LUMIRROR (registered trademark) 125T60" (haze value: 2.63) manufactured by Toray Industries, Inc., as the PET film. However, the substrate is not limited thereto.

As the haze meter, it is possible to use, for example, a haze meter (Model number: NDH5000 SP) manufactured by Nippon Denshoku Industries Co., Ltd. However, the haze meter is not limited thereto.

< Constituent Unit Derived from Monomer Having Self-Crosslinkable Group >

The water-soluble (meth)acrylic resin B preferably contains a constituent unit derived from a monomer having a self-crosslinkable group.

When the water-soluble (meth)acrylic resin B contains a constituent unit derived from a monomer having a self-crosslinkable group, the coating film to be formed tends to show a higher adhesive strength under high temperature conditions at the time of bonding electromagnetic steel sheets.

Specific examples of the self-crosslinkable group in the water-soluble (meth)acrylic resin B are the same as the specific examples of the self-crosslinkable group in the specific (meth)acrylic resin particles A.

The self-crosslinkable group is preferably at least one selected from the group consisting of N-methylol group, N-butylol group, and glycidyl group.

Specific examples of the monomer having a self-crosslinkable group in the water-soluble (meth)acrylic resin B are the same as the specific examples of the monomer having a self-crosslinkable group in the specific (meth)acrylic resin particles A.

The monomer having a self-crosslinkable group preferably includes at least one selected from the group consisting of N-methylolacrylamide (NMAM) and hydroxyethyl acrylamide (HEAA), and is more preferably at least one selected from the group consisting of N-methylolacrylamide (NMAM) and hydroxyethyl acrylamide (HEAA).

In a case in which the water-soluble (meth)acrylic resin B contains a constituent unit derived from a monomer having a self-crosslinkable group, the water-soluble (meth)acrylic resin B may contain only one kind of the constituent unit derived from a monomer having a self-crosslinkable group, or two or more kinds thereof.

In a case in which the water-soluble (meth)acrylic resin B contains a constituent unit derived from a monomer having a self-crosslinkable group, the content percentage of the constituent unit derived from a monomer having a self-crosslinkable group is not particularly limited. However, for example, the content percentage thereof is preferably from 0.1% by mass to 10.0% by mass, more preferably from 1.0% by mass to 5.0% by mass, and still more preferably from 1.5% by mass to 2.0% by mass, with respect to the total constituent units of the water-soluble (meth)acrylic resin B.

When the content percentage of the constituent unit derived from a monomer having a self-crosslinkable group, in the water-soluble (meth)acrylic resin B, is within the range described above with respect to the total constituent units of the water-soluble (meth)acrylic resin B, the coating film to be formed tends to show a higher adhesive strength under high temperature conditions at the time of bonding electromagnetic steel sheets.

< Constituent Unit Derived from Monomer Having Hydroxyl Group >

The water-soluble (meth)acrylic resin B preferably contains a constituent unit derived from a monomer having a hydroxyl group.

In the present disclosure, the "constituent unit derived from a monomer having a hydroxyl group" refers to a constituent unit formed by the addition polymerization of a monomer having a hydroxyl group. In the present disclosure, the definition of the hydroxyl group in the monomer having a hydroxyl group does not include a hydroxyl group constituting a part of the self-crosslinkable group.

The monomer having a hydroxyl group may be, for example, a monomer having at least one hydroxyl group and ethylenically unsaturated group within one molecule.

The ethylenically unsaturated group is not particularly limited, and examples thereof include vinyl group, allyl group, vinylphenyl group, (meth)acrylamide group, and (meth)acryloyl group.

The ethylenically unsaturated group is preferably a (meth)acryloyl group.

Specific examples of the monomer having a hydroxyl group include 2-hydroxyethyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, 10-hydroxydecyl (meth)acrylate, 12-hydroxylauryl (meth)acrylate, 3-methyl-3-hydroxybutyl (meth)acrylate, 1,1-dimethyl-3-hydroxybutyl (meth)acrylate, 1,3-dimethyl-3-hydroxybutyl (meth)acrylate, 2,2,4-trimethyl-3-hydroxypentyl (meth)acrylate, 2-ethyl-3-hydroxyhexyl (meth)acrylate, glycerin mono(meth)acrylate, polypropylene glycol mono(meth)acrylate, polyethylene glycol mono(meth)acrylate, and poly(ethylene glycol-propylene glycol) mono(meth)acrylate.

The monomer having a hydroxyl group preferably includes a hydroxyalkyl (meth)acrylate, and is more preferably a hydroxyalkyl (meth)acrylate. The hydroxyalkyl (meth)acrylate is preferably a hydroxyalkyl (meth)acrylate having a hydroxyalkyl group containing from 2 to 4 carbon atoms, more preferably 2-hydroxyethyl (meth)acrylate, and still more preferably 2-hydroxyethyl methacrylate.

In a case in which the water-soluble (meth)acrylic resin B contains a constituent unit derived from a monomer having a hydroxyl group, the water-soluble (meth)acrylic resin B may contain only one kind of the constituent unit derived from a monomer having a hydroxyl group, or two or more kinds thereof.

In a case in which the water-soluble (meth)acrylic resin B contains a constituent unit derived from a monomer having a hydroxyl group, the content percentage of the constituent unit derived from a monomer having a hydroxyl group is not particularly limited. However, for example, the content percentage thereof is preferably from 5% by mass to 30% by mass, more preferably from 10% by mass to 25% by mass, and still more preferably from 15% by mass to 25% by mass, with respect to the total constituent units of the water-soluble (meth)acrylic resin B.

When the content percentage of the constituent unit derived from a monomer having a hydroxyl group, in the water-soluble (meth)acrylic resin B, is 5% by mass or more with respect to the total constituent units of the water-soluble (meth)acrylic resin B, the coating film to be formed tends to have a higher adhesion performance.

When the content percentage of the constituent unit derived from a monomer having a hydroxyl group, in the water-soluble (meth)acrylic resin B, is 30% by mass or less with respect to the total constituent units of the water-soluble (meth)acrylic resin B, the production stability of the water-soluble (meth)acrylic resin B tends to be further improved.

< Constituent Unit Derived from (Meth)acrylic Acid Alkyl Ester Monomer >

The water-soluble (meth)acrylic resin B preferably contains a constituent unit derived from a (meth)acrylic acid alkyl ester monomer.

The definition of the "(meth)acrylic acid alkyl ester monomer" in the water-soluble (meth)acrylic resin B does not encompass a monomer corresponding to the monomer having a self-crosslinkable group, and a monomer corresponding to the monomer having a hydroxyl group.

The type of the (meth)acrylic acid alkyl ester monomer is not particularly limited.

The (meth)acrylic acid alkyl ester monomer may be an acrylic acid alkyl ester monomer, or a methacrylic acid alkyl ester monomer.

The alkyl group contained in the (meth)acrylic acid alkyl ester monomer may be unsubstituted, or may have a substituent (however, excluding a carboxy group, a self-crosslinkable group, and a hydroxyl group), but is preferably unsubstituted.

The alkyl group contained in the (meth)acrylic acid alkyl ester monomer may be linear, branched, or cyclic.

The alkyl group contained in the (meth)acrylic acid alkyl ester monomer preferably has, for example, from 1 to 12 carbon atoms, more preferably from 1 to 8 carbon atoms, and still more preferably from 1 to 4 carbon atoms.

Specific examples of the (meth)acrylic acid alkyl ester monomer in the water-soluble (meth)acrylic resin B are the same as the specific examples of the (meth)acrylic acid alkyl ester monomer in the specific (meth)acrylic resin particles (A).

From the viewpoint of water solubility, for example, the (meth)acrylic acid alkyl ester monomer preferably includes at least one selected from the group consisting of n-butyl acrylate, methyl methacrylate and ethyl acrylate, more preferably includes at least one selected from the group consisting of methyl methacrylate and ethyl acrylate, and still more preferably includes methyl methacrylate.

In a case in which the water-soluble (meth)acrylic resin B contains a constituent unit derived from a (meth)acrylic acid alkyl ester monomer, the water-soluble (meth)acrylic resin B may contain only one kind of the constituent unit derived from a (meth)acrylic acid alkyl ester monomer, or two or more kinds thereof.

In a case in which the water-soluble (meth)acrylic resin B contains a constituent unit derived from a (meth)acrylic acid alkyl ester monomer, the content percentage of the constituent unit derived from a (meth)acrylic acid alkyl ester monomer in the water-soluble (meth)acrylic resin B is not particularly limited. However, for example, the content percentage thereof is preferably from 40% by mass to 90% by mass, more preferably from 40% by mass to 80% by mass, and still more preferably from 40% by mass to 70% by mass, with respect to the total constituent units of the water-soluble (meth)acrylic resin B.

< Constituent Unit Derived from Another Monomer >

The water-soluble (meth)acrylic resin B may contain a constituent unit derived from a monomer (namely, another monomer) that does not correspond to any of the monomer having self-crosslinkable group, the monomer having a hydroxyl group, and the (meth)acrylic acid alkyl ester monomer.

Examples of the constituent unit derived from another monomer include: constituent units derived from (meth) acrylates having an aromatic ring, represented by benzyl(meth)acrylate and phenoxyethyl (meth)acrylate; constituent units derived from alkoxyalkyl (meth)acrylates represented by methoxyethyl (meth)acrylate and ethoxyethyl (meth) acrylate; constituent units derived from vinyl cyanides represented by acrylonitrile and methacrylonitrile; and constituent units derived from vinyl esters represented by vinyl formate, vinyl acetate, vinyl propionate and vinyl versatate.

In a case in which the water-soluble (meth)acrylic resin B contains a constituent unit derived from another monomer, the water-soluble (meth)acrylic resin B may contain only one kind of the constituent unit derived from another monomer, or two or more kinds thereof.

In a case in which the water-soluble (meth)acrylic resin B contains a constituent unit derived from another monomer, the content percentage of the constituent unit derived from another monomer can be set as appropriate, to the extent that the effects of the coating composition according to the present disclosure are not impaired.

<< Glass Transition Temperature of Water-Soluble (Meth)acrylic Resin B >>

The glass transition temperature of the water-soluble (meth)acrylic resin B is not particularly limited. However, for example, the glass transition temperature is preferably 100°C or lower, more preferably 90°C or lower, and still more preferably 80°C or lower.

When the glass transition temperature of the water-soluble (meth)acrylic resin B is 100°C or lower, the water-soluble (meth)acrylic resin B tends to have an excellent film forming ability.

The lower limit of the glass transition temperature of the water-soluble (meth)acrylic resin B is preferably, for example, -70°C or higher.

The glass transition temperature of the water-soluble (meth)acrylic resin B is determined in the same manner as determining the glass transition temperature of the specific (meth)acrylic resin particles A previously described.

The glass transition temperature of the water-soluble (meth)acrylic resin B can be adjusted as appropriate, for example, by using two or more kinds of monomers whose homopolymers have different glass transition temperatures.

<< Weight Average Molecular Weight of Water-Soluble (Meth)acrylic Resin B >>

The weight average molecular weight (hereinafter, also referred to as "Mw") of the water-soluble (meth)acrylic resin B is not particularly limited. However, for example, the weight average molecular weight is preferably from 1,000 to 100,000, more preferably from 5,000 to 50,000, and still more preferably from 8,000 to 30,000.

When the weight average molecular weight of the water-soluble (meth)acrylic resin B is 1,000 or more, the adhesion performance of the coating film to be formed tends to be further improved.

When the weight average molecular weight of the water-soluble (meth)acrylic resin B is 100,000 or less, the production stability of the water-soluble (meth)acrylic resin B and the coatability of the coating composition tend to be further improved.

The weight average molecular weight of the water-soluble (meth)acrylic resin B is a value measured by the following method. Specifically, the weight average molecular weight is measured in accordance with the following procedures (1) to (3).

(1) A solution of the water-soluble (meth)acrylic resin B is coated on a release paper, and dried at 100°C for one minute, to obtain the water-soluble (meth)acrylic resin B in the form of a film.

(2) The water-soluble (meth)acrylic resin B in the form of a film obtained in the procedure (1) above, and tetrahydrofuran are used to obtain a sample solution having a solid concentration of 0.2% by mass. The "solid concentration" as used herein refers to the mass percentage of the water-soluble (meth)acrylic resin B in the sample solution.

(3) Using gel permeation chromatography (GPC), the weight average molecular weight of the water-soluble (meth) acrylic resin B is measured as a value in terms of standard polystyrene, under the following conditions.

- Conditions -

Measuring apparatus: High-speed GPC [model number: HLC-8220 GPC, manufactured by Tosoh Corporation]
Detector: Differential refractometer (RI) [incorporated into HLC-8220, manufactured by Tosoh Corporation]
Columns: Four TSkgel GMH$_{XL}$ columns [manufactured by Tosoh Corporation] are used.
Column temperature: 40°C
Eluent: Tetrahydrofuran
Injection volume of sample solution: 100 $\mu$L
Flow rate: 0.8 mL/min

The weight average molecular weight of the water-soluble (meth)acrylic resin B can be controlled to a desired value, by adjusting the polymerization temperature, the polymerization time, the type and the used amount of polymerization initiator, the type and the used amount of chain transfer agent, and the like.

<< Content of Water-Soluble (Meth)acrylic resin B >>

The content of the water-soluble (meth)acrylic resin B in the coating composition according to the present disclosure is not particularly limited, as long as the ratio [mass content of the specific (meth)acrylic resin particles A / mass content of the water-soluble (meth)acrylic resin B] of the mass content of the specific (meth)acrylic resin particles A to the mass content of the water-soluble (meth)acrylic resin B is from 95/5 to 85/15.

When the ratio of the mass content of the specific (meth)acrylic resin particles A to the mass content of the water-soluble (meth)acrylic resin B is from 95/5 to 85/15, the coating composition according to the present disclosure can achieve both an excellent coating to the surface of an electromagnetic steel sheet, and the formation of a coating film that shows a high adhesive strength under high temperature conditions at the time of bonding electromagnetic steel sheets. From the viewpoint of forming a coating film that shows a higher adhesive strength, for example, the ratio of the mass content of the specific (meth)acrylic resin particles A to the mass content of the water-soluble (meth)acrylic resin B is preferably from 95/5 to 90/10.

[Method of Producing Water-Soluble (Meth)acrylic Resin B]

The method of producing the water-soluble (meth)acrylic resin B is not particularly limited, as long as the water-soluble (meth)acrylic resin B previously described can be produced.

The water-soluble (meth)acrylic resin B can be produced, for example, by the following method.

First, a dispersion containing (meth)acrylic resin particles having a carboxy group as a dispersoid is prepared by the emulsion polymerization method, using a monomer component including at least a monomer having a carboxy group. Subsequently, a base is added to the thus prepared dispersion, to neutralize the carboxy groups in the (meth)acrylic resin particles. In this manner, the water-soluble (meth)acrylic resin B can be obtained. It is thought that when the carboxy groups in the (meth)acrylic resin particles are neutralized, the dissociation of carboxy groups is promoted to enhance the acidity, and as a result, micelles are destroyed, thereby water-solubilizing the (meth)acrylic resin.

Examples of the emulsion polymerization method for producing the water-soluble (meth)acrylic resin B include the following methods [1] to [3]. In the following description, the monomers forming the constituent units of the water-soluble (meth)acrylic resin B are also referred to as "monomer component B".

[1] A method in which the monomer component B, a surfactant and water are introduced into a reactor equipped with a thermometer, a stirrer, a raw material introduction pipe, a reflux condenser, a nitrogen introduction pipe and the like, the resulting mixture is heated with stirring under a nitrogen gas stream, and then a polymerization initiator, a reducing agent, a chain transfer agent and the like are added thereto, if appropriate, to allow the emulsion polymerization reaction to proceed (so-called batch process).
[2] A method in which at least a surfactant and water are introduced into a reactor equipped with a thermometer, a stirrer, a raw material introduction pipe, a reflux condenser, a nitrogen introduction pipe and the like, the resulting mixture is heated with stirring under a nitrogen gas stream, then the monomer component B is added dropwise, and a polymerization initiator, a reducing agent, a chain transfer agent and the like are added thereto, if appropriate, to allow the emulsion polymerization reaction to proceed (so-called monomer dropping method).
[3] A method as described below. Specifically, in a separate container, the monomer component B is emulsified in advance, using at least a surfactant and water, to prepare a pre-emulsion. A portion of the pre-emulsion and water are introduced into a reactor equipped with a thermometer, a stirrer, a raw material introduction pipe, a reflux condenser, a nitrogen introduction pipe and the like, and the resulting mixture is heated with stirring under a nitrogen gas stream. After the temperature in the reactor has stabilized, the remaining pre-emulsion is added dropwise into the reactor, while adding a polymerization initiator, a reducing agent, a chain transfer agent and the like dropwise, if appropriate, to allow the emulsion polymerization reaction to proceed (so-called monomer emulsion dropping method).

Of these methods, the monomer emulsion dropping method [3] described above is preferred as the emulsion polymerization method for producing the water-soluble (meth)acrylic resin B.

The monomer component B includes a monomer having a carboxy group.

The monomer having a carboxy group may be, for example, a monomer having at least one carboxy group and ethylenically unsaturated group within one molecule.

The ethylenically unsaturated group is not particularly limited, and examples thereof include vinyl group, allyl group, vinylphenyl group, (meth)acrylamide group, and (meth)acryloyl group.

The ethylenically unsaturated group is preferably a (meth)acryloyl group.

Specific examples of the monomer having a carboxy group included in the monomer component B are the same as the specific examples of the monomer having a carboxy group in the specific (meth)acrylic resin particles A.

The monomer having a carboxy group is preferably a (meth)acrylic monomer having a carboxy group, more preferably (meth)acrylic acid, and still more preferably acrylic acid.

The monomer component B may include only one kind of the monomer having a carboxy group, or two or more kinds thereof.

The amount of the monomer having a carboxy group to be used is preferably, for example, within the range of from 10 parts by mass to 30 parts by mass with respect to 100 parts by mass of the total amount of the monomer component B.

The monomer component B preferably includes a monomer having a self-crosslinkable group.

The details of the monomer having a self-crosslinkable group are as previously described.

In a case in which the monomer component B includes a monomer having a self-crosslinkable group, the monomer component B may include only one kind of the monomer having a self-crosslinkable group, or two or more kinds thereof.

In the case of using a monomer having a self-crosslinkable group, the amount of the monomer having a self-crosslinkable group to be used is preferably, for example, within the range of from 1 part by mass to 5 parts by mass with respect to 100 parts by mass of the total amount of the monomer component B.

The monomer component B preferably includes a monomer having a hydroxyl group.

The details of the monomer having a hydroxyl group are as previously described.

In a case in which the monomer component B includes a monomer having a hydroxyl group, the monomer component B may include only one kind of the monomer having a hydroxyl group, or two or more kinds thereof.

In the case of using a monomer having a hydroxyl group, the amount of the monomer having a hydroxyl group to be used is preferably, for example, within the range of from 10 parts by mass to 30 parts by mass with respect to 100 parts by mass of the total amount of the monomer component B.

The monomer component B preferably includes a (meth)acrylic acid alkyl ester monomer.

The details of the (meth)acrylic acid alkyl ester monomer are as previously described.

In a case in which the monomer component B includes a (meth)acrylic acid alkyl ester monomer, the monomer component B may include only one kind of the (meth)acrylic acid alkyl ester monomer, or two or more kinds thereof.

In the case of using a (meth)acrylic acid alkyl ester monomer, the amount of the (meth)acrylic acid alkyl ester monomer to be used is preferably, for example, within the range of from 40 parts by mass to 80 parts by mass with respect to 100 parts by mass of the total amount of the monomer component B.

The type of the surfactant is not particularly limited.

The surfactant may be an anionic surfactant, a cationic surfactant, an amphoteric surfactant or a nonionic surfactant, and may be a combination of any of these surfactants. The surfactant is preferably, for example, an anionic surfactant and/or a nonionic surfactant, and more preferably an anionic surfactant, from the viewpoint of the production stability of the water-soluble (meth)acrylic resin B.

Specific examples of the anionic surfactant are the same as the specific examples of the anionic surfactant in the emulsion polymerization method for producing the specific (meth)acrylic resin particles A.

Specific examples of the nonionic surfactant are the same as the specific examples of the nonionic surfactant in the emulsion polymerization method for producing the specific (meth)acrylic resin particles A.

In the emulsion polymerization method for producing the water-soluble (meth)acrylic resin B, only one kind of the surfactant may be used, or two or more kinds thereof may be used.

The amount of the surfactant to be used in the emulsion polymerization method for producing the water-soluble (meth)acrylic resin B is not particularly limited. However, for example, the amount of the surfactant is preferably from 0.5 parts by mass to 5.0 parts by mass with respect to 100 parts by mass of the total amount of the monomer component B.

The polymerization initiator is not particularly limited as long as the polymerization initiator can be used in a usual emulsion polymerization.

The polymerization initiator may be, for example, a persulfate salt, an organic peroxide, or an azo compound.

Specific examples of the persulfate salt, the organic peroxide and the azo compound, are the same as specific examples of the persulfate salt, the organic peroxide and the azo compound, in the emulsion polymerization method for producing the specific (meth)acrylic resin particles A.

In the emulsion polymerization method for producing the water-soluble (meth)acrylic resin B, only one kind of the polymerization initiator may be used, or two or more kinds thereof may be used.

The amount of the polymerization initiator to be used in the emulsion polymerization method for producing the water-soluble (meth)acrylic resin B is not particularly limited. However, for example, the amount of the polymerization initiator is preferably from 0.5 parts by mass to 3.0 parts by mass with respect to 100 parts by mass of the total amount of the monomer component B.

In the emulsion polymerization method for producing the water-soluble (meth)acrylic resin B, a reducing agent may be used along with the polymerization initiator.

Specific examples of the reducing agent are the same as the specific examples of the reducing agent in the emulsion polymerization method for producing the specific (meth)acrylic resin particles A.

In the case of using a reducing agent in the emulsion polymerization method for producing the water-soluble (meth)acrylic resin B, only one kind of the reducing agent may be used, or two or more kinds thereof may be used.

In the case of using a reducing agent, the amount of the reducing agent to be used in the emulsion polymerization method for producing the water-soluble (meth)acrylic resin B is not particularly limited. However, for example, the amount of the reducing agent is preferably from 0.1 parts by mass to 1.0 parts by mass with respect to 100 parts by mass of the total amount of the monomer component B.

The type of the chain transfer agent is not particularly limited.

Specific examples of the chain transfer agent include: cyanoacetic acid; alkyl ester compounds of cyanoacetic acid which have from 1 to 8 carbon atoms; bromoacetic acid; alkyl ester compounds of bromoacetic acid which have from 1 to 8 carbon atoms; aromatic compounds represented by $\alpha$-methylstyrene, anthracene, phenanthrene, fluorene and 9-phenylfluorene; aromatic nitro compounds represented by p-nitroaniline, nitrobenzene, dinitrobenzene, p-nitro benzoic acid, p-nitrophenol and p-nitro toluene; benzoquinone derivatives represented by benzoquinone and 2,3,5,6-tetramethyl-p-benzoquinone; borane derivatives represented by tributylborane; halogenated hydrocarbon compounds represented by carbon tetrabromide, carbon tetrachloride, 1,1,2,2-tetrabromoethane, tribromoethylene, trichloroethylene, bromotrichloromethane, tribromomethane and 3-chloro-1-propene; aldehyde compounds represented by chloral and furaldehyde; alkyl mercaptan compounds having from 1 to 18 carbon atoms; aromatic mercaptan compounds represented by thiophenol and toluene mercaptan; mercaptoacetic acid; alkyl ester compounds of mercaptoacetic acid which have from 1 to 10 carbon atoms; hydroxyalkyl mercaptan compounds (such as 2-mercaptoethanol) having from 1 to 12 carbon atoms; as well as terpene compounds represented by pinene and terpinolene.

In the case of using a chain transfer agent in the emulsion polymerization method for producing the water-soluble (meth)acrylic resin B, only one kind of the chain transfer agent may be used, or two or more kinds thereof may be used.

In the case of using a chain transfer agent, the amount of the chain transfer agent to be used in the emulsion polymerization method for producing the water-soluble (meth)acrylic resin B is not particularly limited. However, for example, the amount of the chain transfer agent is preferably from 1 part by mass to 3 parts by mass with respect to 100 parts by mass of the total amount of the monomer component B.

The emulsion polymerization method for producing the water-soluble (meth)acrylic resin B is carried out, for example, at a polymerization temperature of from 58°C to 62°C, and preferably from 59°C to 61°C. Further, the emulsion polymerization method is carried out, for example, for a polymerization time of from 3 hours to 6 hours, and preferably from 4 hours to 5 hours.

According to the emulsion polymerization method described above, a dispersion containing the (meth)acrylic resin particles as a dispersoid can be obtained. By adding a base to the resulting dispersion to neutralize the carboxy groups in the (meth)acrylic resin particles, it is possible to produce the water-soluble (meth)acrylic resin B.

Specific examples of the base include ammonia water (an aqueous solution of ammonium hydroxide), and an aqueous solution of sodium hydroxide.

The base is preferably ammonia water, for example, from the viewpoint of the adhesion performance of the resulting coating film.

[Water]

The coating composition according to the present disclosure includes water.

The type of water is not particularly limited.

For example, the water is preferably distilled water, deionized water (also referred to as "ion exchanged water") or pure water, from the viewpoint of containing fewer impurities.

The content percentage of the water in the coating composition according to the present disclosure is not particularly limited. However, for example, the content percentage thereof is preferably from 35% by mass to 50% by mass, and more preferably from 40% by mass to 45% by mass, with respect to the total mass of the coating composition.

[Other Component]

The coating composition according to the present disclosure may include a component (namely, another component) other than the components previously described, to the extent that the effects of the coating composition are not impaired.

The other component may be, for example, an aqueous medium other than water.

The aqueous medium other than water may be, for example, a water-miscible organic solvent.

Examples of the water-miscible organic solvent include organic solvents, for example: monohydric alcohol compounds such as methanol and ethanol; polyhydric alcohol compounds such as glycerin, ethylene glycol and propylene glycol; glycol derivatives such as ethylene glycol monoethyl ether and propylene glycol monobutyl ether.

Further, examples of the other component include various types of additives such as antiseptics, wetting agents, and antifoaming agents.

[Gel Fraction of Coating Composition]

In the coating composition according to the present disclosure, the gel fraction of the coating composition at a temperature higher than the temperature at which the crosslinking by the self-crosslinkable groups contained in the specific (meth)acrylic resin particles A proceeds, is preferably higher than the gel fraction of the coating composition at a temperature lower than the temperature at which the crosslinking by the self-crosslinkable groups contained in the specific (meth)acrylic resin particles A proceeds.

When the gel fraction of the coating composition according to the present disclosure satisfy the requirement as described above, there is a tendency that the coating composition according to the present disclosure can achieve both an excellent coating to the surface of an electromagnetic steel sheet, and the formation of a coating film that shows a high adhesive strength under high temperature conditions at the time of bonding electromagnetic steel sheets, in a balanced manner.

The gel fraction of the coating composition according to the present disclosure is the proportion of solvent insoluble components, measured using ethyl acetate as an extraction solvent. Specifically, the gel fraction of the coating composition according to the present disclosure is determined in accordance with the following procedures [1] to [17].

[1] Ammonia water is added to the coating composition according to the present disclosure, to adjust the pH to 8.5 (liquid temperature: 25°C). Subsequently, the resulting liquid is coated on a polyethylene terephthalate (PET) release film having a thickness of 100 μm, to form a coating film. Then the thus formed coating film is dried at 105°C for 2 minutes, to obtain a resin film with a release film.

[2] The resulting resin film with a release film is cut out into a size of 75 mm × 75 mm. The weight of the resin film included in the thus cut-out resin film with a release film is about 0.2 g.

[3] A 250-mesh (wire diameter: 0.03 mm, aperture:72 $\mu$m) wire mesh made of stainless steel is prepared, and the wire mesh is cut out into a size of 100 mm × 100 mm. The unraveling at the edges of the wire mesh causes measurement errors, and thus is removed in advance.

[4] The thus cut-out wire mesh is degreased using ethyl acetate, followed by drying. The wire mesh after drying is stored in a desiccator.

[5] The mass of the wire mesh is measured accurately. The measured mass of the wire mesh is defined as A (unit: g).

[6] The resin film with a release film that has been cut out into a s size of 75 mm × 75 mm in the step [2] above is pasted onto the center of the wire mesh, and then the release film is peeled off from the resin film, to obtain a wire mesh with a resin film. It is noted that the resin film is pasted onto the wire mesh such that the resin film is arranged within the face of the wire mesh after being folded by the steps [7] to [9] to be described later.

[7] The wire mesh with a resin film is folded in half, with the side of the resin film facing inside. Specifically, the wire mesh with a resin film is folded in half such that the far-side edge of the wire mesh with a resin film overlaps with the near-side edge thereof.

[8] One third on the near side (the side where the two edges overlap) of the wire mesh with a resin film, that has been folded in half, is folded toward the far side, and then one third on the far side thereof is folded toward the near side. At this point, the wire mesh with a resin film is in a state where the mesh has been folded into one sixth of the original size (100 mm) in the longitudinal direction thereof, and has not been folded in the transverse direction thereof.

[9] One third on the left side in the longitudinal direction of the wire mesh with a resin film, that has been folded in the step [8] above, is folded toward the right side of the mesh, and then one third on the right side is folded toward the left side. The resultant is defined as "sample X1". The sample X1 has been folded into one sixth of the original size (100 mm) in the longitudinal direction, and has been folded into one third of the original size in the transverse direction.

[10] The mass the sample X1 is accurately measured using a precision balance. The thus measured mass is defined as B (unit: g).

[11] The folds of the sample X1 is fixed with staples. The resultant is defined as "sample X2". Two samples X2 are prepared per one sample.

[12] The mass of each sample X2 is accurately measured using a precision balance. The thus measured mass is defined as C (unit: g).

[13] The samples X2 are placed in a glass bottle containing 80 g of ethyl acetate, and the bottle is closed with a lid.

[14] The glass bottle containing the samples X2 is left to stand for three days in an environment at an ambient temperature of 23°C and 50% RH.

[15] The samples X2 are taken out of the glass bottle, and washed with a small amount of ethyl acetate.

[16] The samples X2 are dried under the conditions of a drying temperature of 100°C and a drying time of 24 hours. The mass of each of the samples X2 after drying is accurately measured using a precision balance. The thus measured mass is defined as D (unit: g).

[17] The gel fraction is calculated for each sample by the following equation, and the arithmetic mean of the calculated values is determined.

$$\text{Gel fraction [\% by mass]} = (D - (A + (C - B))) / (B - A) \times 100$$

[Applications of Coating Composition]

The coating composition according to the present disclosure is used for coating the surface of an electromagnetic steel sheet used in the production of a laminated steel sheet. Since the coating composition according to the present disclosure is capable of forming a coating film that shows a high adhesive strength under high temperature conditions at the time of bonding electromagnetic steel sheets, and has an excellent coatability, the coating composition is specifically used, for example, in the application of joining electromagnetic steel sheets in the production of a laminated steel sheet. The coating composition according to the present disclosure is suitable, for example, for the application of forming an adhesive coating, in an electromagnetic steel sheet with an adhesive coating which is used in the production of laminated steel sheet.

[Electromagnetic Steel Sheet]

The electromagnetic steel sheet is a steel sheet on which an adhesive coating is to be formed, and is not particularly limited.

The electromagnetic steel sheet may be a non-oriented electromagnetic steel sheet, or an oriented electromagnetic steel sheet.

Specifically, it is possible to use, for example, a non-oriented electromagnetic steel sheet defined in JIS C 2552: 2014, an oriented electromagnetic steel sheet defined in JIS C 2553: 2019, or a non-oriented thin electromagnetic steel sheet or an oriented thin electromagnetic steel sheet defined in JIS C 2558: 2015, as the electromagnetic steel sheet.

[Method of Producing Coating Composition]

The method of producing the coating composition according to the present disclosure is not particularly limited.
The coating composition according to the present disclosure can be produced, for example, by mixing a dispersion of the specific (meth)acrylic resin particles A and an aqueous solution of the water-soluble (meth)acrylic resin B, such that the mass ratio [A/B] of the specific (meth)acrylic resin particles A to the water-soluble (meth)acrylic resin B is from 95/5 to 85/15.

The mixing method is not particularly limited.

The mixing method may be, for example, a method of mixing by stirring.
A common stirring tool or stirring device can be used for the stirring.
The stirring is preferably carried out at a stirring temperature of, for example, from 20°C to 30°C, but not particularly limited thereto.

EXAMPLES

The coating composition according to the present disclosure will be described below more specifically with reference to Examples. The present disclosure is in no way limited to the following Examples, as long as the gist of the present disclosure is not deviated.

[Production of Coating Compositions]

[Example 1]

1. Production of (Meth)acrylic Resin Particles A

Into a stainless-steel container, 54.4 parts by mass of n-butyl acrylate [n-BA; an acrylic acid alkyl ester monomer], 169.5 parts by mass of methyl methacrylate [MMA; a methacrylic acid alkyl ester monomer], 128.4 parts by mass of styrene [St; another monomer], 40 parts by mass of methacrylic acid [MAA; a monomer having a carboxy group], and 7.8 parts by mass of hydroxyethyl acrylamide [HEAA; a monomer having a self-crosslinkable group] were introduced and mixed, to prepare a monomer mixture.
Subsequently, 172.0 parts by mass of deionized water, 2.7 parts by mass of NOIGEN (registered trademark) EA-197D [manufactured by DKS. Co. Ltd.] and 4.1 parts by mass of EMULGEN (registered trademark) A-60 [manufactured by Kao Corporation] as nonionic surfactants, and 2.7 parts by mass of NEOPELEX (registered trademark) G-65 [manufactured by Kao Corporation] as an anionic surfactant, were introduced into another stainless-steel container, followed by mixing to dissolve the components, thereby preparing an aqueous surfactant solution.
Thereafter, while gradually adding the monomer mixture prepared as described above to the aqueous surfactant solution, the resulting mixture was stirred using a stirrer to cause emulsification, thereby preparing a pre-emulsion. The thus prepared pre-emulsion was used for polymerization.
A reflux condenser, a stirrer, a nitrogen gas introduction pipe, a pump for dropping the pre-emulsion [trade name: Hi-Cera pump V-10, manufactured by IWAKI Co., Ltd.], and a polymerization initiator addition apparatus [trade name: a peristaltic pump, MP-2000, manufactured by Tokyo Rikakikai Co., Ltd.] were attached to a flask having a capacity of 7 L (liter; the same applies hereinafter), and the polymerization was carried out in a thermostatic chamber. Specifically, the polymerization was carried out as follows.
A quantity of 162.4 parts by mass of deionized water was introduced into the flask, and then a portion (17.5 parts by mass) of the pre-emulsion prepared as described above was added to the flask. While blowing nitrogen gas into the flask at a flow rate of 300 mL/min and stirring the flask at an arbitrary rotational speed [standard condition: 240 rpm (revolutions per minute; the same applies hereinafter)], the internal temperature of the flask was increased to an arbitrary reaction temperature [standard condition: 62°C]. After the internal temperature had stabilized, 2.3 parts by mass of a 24% by mass aqueous solution of ammonium peroxodisulfate [polymerization initiator], and 2.3 parts by mass of a 20% by mass aqueous solution of sodium hydrogen sulfite [reducing agent] were added to the flask, and the flow rate of the nitrogen gas was adjusted to 50 mL/min. After confirming an increase in the temperature in the flask, the remaining pre-emulsion (564 parts by mass) was added dropwise over 270 minutes, and in addition, 63.4 parts by mass of a 2.4% by mass aqueous solution of ammonium peroxodisulfate [polymerization initiator] and 63.4 parts by mass of a 2.0% by mass aqueous solution of sodium hydrogen sulfite [reducing agent] were added dropwise over 360 minutes. Thirty minutes after the completion of the dropwise addition of the aqueous solution of ammonium peroxodisulfate and sodium hydrogen sulfite, 6.4 parts by mass of a 6.9% by mass aqueous solution of t-butyl hydroperoxide [polymerization initiator], and 6.4 parts by mass of a 4.4% by mass aqueous solution of sodium hydroxymethanesulfinate [reducing agent] were added dropwise over 30 minutes. The resulting mixture was cooled to 30°C 150 minutes after the completion of the dropwise addition of the pre-emulsion, thereby completing the polymerization reaction.

To an emulsion polymer obtained by the polymerization reaction, 1.3 parts by mass of an antiseptic [trade name: TOPCIDE 350, manufactured by Permachem Asia, Ltd.], and 1.3 parts by mass of a wetting agent [trade name: SURFINOL (registered trademark) 440, manufactured by Nissin Chemical Co., Ltd.] were added, to obtain an aqueous dispersion of the (meth)acrylic resin particles A.

2. Production of Water-Soluble (Meth)acrylic Resin B.

To a stainless-steel container, 126.2 parts by mass of methyl methacrylate [MMA; a methacrylic acid alkyl ester monomer], 48.0 parts by mass of ethyl acrylate [EA; an acrylic acid alkyl ester monomer], and 60.0 parts by mass of acrylic acid [AA; a monomer having a carboxy group], 60.0 parts by mass of 2-hydroxyethyl methacrylate [2HEMA; a monomer having a hydroxyl group], and 5.8 parts by mass of hydroxyethyl acrylamide [HEAA; a monomer having a self-crosslinkable group] were introduced and mixed, to prepare a monomer mixture.

Subsequently, 121.0 parts by mass of deionized water, and 4.5 parts by mass of LATEMUL (registered trademark) E-118B [manufactured by Kao Corporation] as an anionic surfactant, were introduced into another stainless-steel container, followed by mixing to dissolve the components, thereby preparing an aqueous surfactant solution.

Thereafter, while gradually adding the monomer mixture prepared as described above to the aqueous surfactant solution, the resulting mixture was stirred using a stirrer to cause emulsification, thereby preparing a pre-emulsion. The thus prepared pre-emulsion was used for polymerization.

A reflux condenser, a stirrer, a nitrogen gas introduction pipe, a pump for dropping the pre-emulsion [trade name: Hi-Cera pump V-10, manufactured by IWAKI Co., Ltd.], and a polymerization initiator addition apparatus [trade name: a peristaltic pump, MP-2000, manufactured by Tokyo Rikakikai Co., Ltd.] were attached to a flask having a capacity of 7 L, and the polymerization was carried out in a thermostatic chamber. Specifically, the polymerization was carried out as follows.

A quantity of 415 parts by mass of deionized water, and 7.0 parts by mass of LATEMUL (registered trademark) E-118B [manufactured by Kao Corporation] as an anionic surfactant, were introduced into the flask, and then a portion (8.5 parts by mass) of the pre-emulsion prepared as described above was added to the flask. While blowing nitrogen gas into the flask at a flow rate of 300 mL/min and stirring the flask at an arbitrary rotational speed [standard condition: 150 rpm], the internal temperature of the flask was increased to an arbitrary reaction temperature [standard condition: 60°C]. Thereafter, 1.0 part by mass of a 69.0% by mass aqueous solution of t-butyl hydroperoxide [polymerization initiator], and 2.5 parts by mass of a 10.0% by mass aqueous solution of sodium hydroxymethanesulfinate [reducing agent] were added to the flask. After the internal temperature had stabilized, the flow rate of nitrogen gas was adjusted to 50 mL/min. After the adjustment, the remaining pre-emulsion (456.6 parts by mass) was added dropwise over 180 minutes, and in addition, 24.5 parts by mass of a 6.9% by mass aqueous solution of t-butyl hydroperoxide [polymerization initiator], 24.5 parts by mass of a 1.2% by mass aqueous solution of sodium hydroxymethanesulfinate [reducing agent], and 39.6 parts by mass of a 14.7% by mass 2-mercaptoethanol [chain transfer agent] were added dropwise over 180 minutes, to obtain an aqueous dispersion of (meth)acrylic resin particles. To the resulting aqueous dispersion of (meth)acrylic resin particles, 58 parts by mass of a 25.0% by mass ammonia water (basic aqueous solution) was added to water-solubilize the (meth)acrylic resin particles, thereby obtaining an aqueous solution of the water-soluble (meth)acrylic resin B.

3. Production of Coating Composition

After mixing 300.0 parts by mass (137.1 parts by mass in terms of solid content) of the aqueous dispersion of the (meth)acrylic resin particles A, and 48.1 parts by mass (15.2 parts by mass in terms of solid content) of the aqueous solution of the water-soluble (meth)acrylic resin B, an appropriate amount of deionized water was added to the mixture, to obtain a coating composition having a solid concentration of 43.5% by mass.

The "solid concentration" as used herein refers to the total mass percentage of the (meth)acrylic resin particles A and the water-soluble (meth)acrylic resin B, in the coating composition. The same applies to the coating compositions to be produced in the following Examples.

[Examples 2 to 10]

The same procedure as in Example 1 was repeated to obtain coating compositions having a solid concentration of 43.5% by mass, except that, in each Example: the monomer compositions of the (meth)acrylic resin particles A and the water-soluble (meth)acrylic resin B were adjusted as shown in Table 1; and the mass ratio [A/B] of the (meth)acrylic resin particles A to the water-soluble (meth)acrylic resin B was adjusted as shown in Table 1.

[Examples 11 to 21]

The same procedure as in Example 1 was repeated to obtain coating compositions having a solid concentration of 43.5% by mass, except that, in each Example: the monomer compositions of the (meth)acrylic resin particles A and the water-soluble (meth)acrylic resin B were adjusted as shown in Table 2; and the mass ratio [A/B] of the (meth)acrylic resin particles A to the water-soluble (meth)acrylic resin B was adjusted as shown in Table 2.

[Comparative Example 1 to 8]

The same procedure as in Example 1 was repeated to obtain coating compositions having a solid concentration of 43.5% by mass, except that, in each Comparative Example: the monomer compositions of the (meth)acrylic resin particles A and the water-soluble (meth)acrylic resin B were adjusted as shown in Table 3; and the mass ratio [A/B] of the (meth)acrylic resin particles A to the water-soluble (meth)acrylic resin B was adjusted as shown in Table 3.

[Comparative Example 9]

The same procedure as in the method of producing the (meth)acrylic resin particles A of Example 6 was repeated, to obtain an aqueous dispersion of the (meth)acrylic resin particles A.
Subsequently, the same procedure as in the method of producing the (meth)acrylic resin particles A of Example 6 was repeated, except that the monomer composition of the (meth)acrylic resin particles in the method of producing the (meth)acrylic resin particles A of Example 6 was changed to the monomer composition shown in Table 4, to obtain an aqueous dispersion of other (meth)acrylic resin particles C.
Thereafter, 300.0 parts by mass (137.1 parts by mass in terms of solid content) of the aqueous dispersion of the (meth)acrylic resin particles A, and 48.1 parts by mass (15.2 parts by mass in terms of solid content) of the aqueous dispersion of the other (meth)acrylic resin particles C were mixed, and then an appropriate amount of deionized water was added to the mixture, to obtain a coating composition having a solid concentration of 43.5% by mass.

[Comparative Example 10]

The same procedure as in the method of producing the (meth)acrylic resin particles A of Example 6 was repeated, to obtain an aqueous dispersion of the (meth)acrylic resin particles A.
Subsequently, the same procedure as in the method of producing the (meth)acrylic resin particles A of Example 6 was repeated, except that the monomer composition of the (meth)acrylic resin particles in the method of producing the (meth)acrylic resin particles A of Example 6 was changed to the monomer composition shown in Table 4, to obtain an aqueous dispersion of other (meth)acrylic resin particles C.
Thereafter, 300.0 parts by mass (137.1 parts by mass in terms of solid content) of the aqueous dispersion of the (meth)acrylic resin particles A, and 105.0 parts by mass (34.3 parts by mass in terms of solid content) of the aqueous dispersion of the other (meth)acrylic resin particles C were mixed, and then an appropriate amount of deionized water was added to the mixture, to obtain a coating composition having a solid concentration of 43.5% by mass.
The monomer composition [unit: % by mass], the glass transition temperature (Tg) [unit: °C] and the average primary particle size [unit: nm] of the (meth)acrylic resin particles A, in each of Examples 1 to 21 and Comparative Examples 1 to 10, are shown in Tables 1 to 4.
The glass transition temperature of the (meth)acrylic resin particles A was measured in the same manner as the method of measuring the glass transition temperature of the specific (meth)acrylic resin particles A previously described.
The average primary particle size of the (meth)acrylic resin particles A was measured in the same manner as the method of measuring the average primary particle size of the specific (meth)acrylic resin particles A previously described.
The monomer composition [unit: % by mass] and the weight average molecular weight (Mw) of the water-soluble (meth)acrylic resin B, in each of Examples 1 to 21 and Comparative Examples 1 to 8, are shown in Tables 1 to 3.
The weight average molecular weight of the water-soluble (meth)acrylic resin B was measured in the same manner as the method of measuring the weight average molecular weight of the water-soluble (meth)acrylic resin B previously described.

As to the water-soluble (meth)acrylic resin B of each of Examples 1 to 21 and Comparative Examples 1 to 8, the haze value of the resin film was measured by the method previously described, and it has been confirmed that each resin film has a haze value of 3.0 or less, namely, each resin is a water-soluble (meth)acrylic resin.

The monomer composition [unit: % by mass], the glass transition temperature (Tg) [unit: °C] and the average primary particle size [unit: nm], of the other (meth)acrylic resin particles C in each of Comparative Examples 9 and 10, are shown in Table 4.

The glass transition temperature of the other (meth)acrylic resin particles C was measured in the same manner as the method of measuring the glass transition temperature of the specific (meth)acrylic resin particles A previously described.

The average primary particle size of the other (meth)acrylic resin particles C was measured in the same manner as the method of measuring the average primary particle size of the specific (meth)acrylic resin particles A previously described.

[Measurement of Gel Fraction of Coating Composition]

The gel fraction of the coating composition of each of Examples 1 to 21 and Comparative Examples 1 to 10 was measured in the same manner as the method of measuring the gel fraction of the coating composition according to the present disclosure previously described. Specifically, the gel fraction was measured as follows.

(1) Preparation of Resin Film with Release Film

(1-1) Gel Fraction of Coating Composition at 170°C

The coating composition was coated on a polyethylene terephthalate (PET) release film having a thickness of 100 μm, using a 4-mil (101.6 μm) applicator, to form a coating film. Subsequently, the thus formed coating film was dried at room temperature (25°C) for 24 hours, and then further dried at 170°C for 90 seconds, to obtain a resin film X with a release film.

(1-2) Gel Fraction of Coating Composition at 200°C

The coating composition was coated on a polyethylene terephthalate (PET) release film having a thickness of 100 μm, using a 4-mil (101.6 μm) applicator, to form a coating film. Subsequently, the thus formed coating film was dried at room temperature (25°C) for 24 hours, then further dried at 170°C for 90 seconds, and then further dried at 200°C for 60 seconds, to obtain a resin film Y with a release film.

(2) Measurement of Gel Fraction

Using the thus obtained resin film X with a release film and resin film Y with a release film, the operations of the step [2] and thereafter, in the method of measuring the gel fraction of the coating composition according to the present disclosure previously described, were carried out. The results of the measurement are shown in Tables 1 to 4.

[Evaluation]

The following evaluations were carried out for each of the coating compositions of Examples 1 to 21 and Comparative Examples 1 to 10.

1. Coatability

An electromagnetic steel sheet [product number: 30HX1600, manufactured by Nippon Steel Corporation] having a size of 2 cm × 10 cm was prepared. Each coating composition diluted to a solid concentration of 32% by mass was coated on the surface of the thus prepared electromagnetic steel sheet, to a wet film thickness of 6.25 μm. Subsequently, the coated coating composition was heated and dried at 170°C for 90 seconds, using a hot air circulation dryer. The film obtained by drying was observed using an optical microscope, to confirm the presence and absence as well as the degree of cissing and cracks. Thereafter, the coatability was evaluated in accordance with the following evaluation criteria. The results of the evaluation are shown in Tables 1 to 4.

In the following evaluation criteria, "AA", "A" and "B" each indicate that the coating composition has a practically usable level of coatability. The coatability is preferably "B", more preferably "A", and still more preferably "AA".

- Evaluation Criteria -

AA: No cissing or crack was observed.
A: Very slight cissing was observed, but no crack was observed.
B: Slight cissing and cracks were observed, but at levels that do not pose any practical problems.
C: Evident cissing and cracks were observed, which were at levels that pose practical problems.

2. Adhesive Strength at High Temperature

Two electromagnetic steel sheets [product number: 30HX1600, manufactured by Nippon Steel Corporation] each having a size of 2 cm × 10 cm were prepared. Each coating composition diluted to a solid concentration of 32% by mass was coated on the surface of each of the two thus prepared electromagnetic steel sheets, so that the film thickness after drying was 2 μm. Subsequently, the coated coating composition was heated and dried at 170°C for 90 seconds, using a hot air circulation dryer, to prepare each evaluation sample. The two pieces of the thus prepared evaluation samples were arranged such that the area of the overlapping portion was 2 cm × 2 cm, and subjected to thermocompression bonding (temperature: 200°C, period of time: 60 seconds, pressure: 3 MPa). The evaluation samples after the thermocompression bonding were subjected to a tensile shear adhesive strength test in an environment of 150°C. The tensile shear adhesive strength test was carried out in accordance with JIS K 6852:1994. The evaluation was carried out based on the measured adhesive strength (also referred to as "adhesive strength at a high temperature") in accordance with the following evaluation criteria. The results of the measurement and the evaluation are shown in Tables 1 to 4.
In the following evaluation criteria, "AA", "A" and "B" each indicate that the coating composition has a practically usable level of adhesive strength at a high temperature. The adhesive strength at a high temperature is preferably "B", more preferably "A", and still more preferably "AA".

- Evaluation Criteria -

AA: The shear adhesive strength was 0.60 MPa or more.
A: The shear adhesive strength was within the range of from 0.40 MPa to less than 0.60 MPa.
B: The shear adhesive strength was within the range of from 0.20 MPa to less than 0.40 MPa.
C: The shear adhesive strength was within the range of less than 0.20 MPa.

3. Pot Life

A quantity of 300 mL of each coating composition immediately after the production was placed in a polyethylene bottle (namely, a container made of polyethylene) and sealed, and then the bottle was left to stand in an environment of an ambient temperature of 25°C for two days. The viscosity at 25°C of each coating composition after being left to stand was measured using a Type BH viscometer [model number: BH II, manufactured by Toki Sangyo Co., Ltd.]. The resulting value was compared with the value of the viscosity of the coating composition immediately after the production that had been measured in advance, and the pot life was evaluated in accordance with the following evaluation criteria. The results of the evaluation are shown in Tables 1 to 4.
In the following evaluation criteria, "A" indicates that the coating composition has a practically usable level of pot life.

- Evaluation Criteria -

A: No change in the viscosity of the coating composition was observed even two days have passed after the production.
B: Changes in the viscosity of the coating composition were observed within two days after the production.

[Table 1]

|  |  |  | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| (Meth)acrylic resin particles A | Monomer compositio n [% by mass] | n-BA | 13.6 | - | 18.7 | 18.7 | - | 18.7 | 15.4 | 13.2 | - | 21.4 |
|  |  | MMA | 42.4 | 40.6 | 37.3 | 37.3 | 35.3 | 37.3 | 35.5 | 39.7 | 35.3 | 34.5 |
|  |  | 2EHA | - | 15.4 | - | - | 20.7 | - | - | - | 20.7 | - |
|  |  | St | 32.1 | 32.1 | 32.1 | 32.1 | 32.1 | 32.1 | 32.1 | 32.1 | 32.1 | 32.1 |
|  |  | MAA | 10.0 | 10.0 | 10.0 | 10.0 | 10.0 | 10.0 | 15.0 | 10.0 | 10.0 | 10.0 |
|  |  | NMA M | - | - | - | - | - | - | - | - | - | - |
|  |  | NBMA | - | - | - | - | - | - | - | - | - | - |
|  |  | HEAA | 1.9 | 1.9 | 1.9 | 1.9 | 1.9 | 1.9 | 1.9 | 5.0 | 1.9 | 1.9 |
|  | Tg [°C] |  | 70 | 70 | 60 | 60 | 60 | 60 | 60 | 60 | 60 | 55 |
|  | Average primary particle size [nm] |  | 290 | 290 | 280 | 280 | 290 | 290 | 290 | 290 | 280 | 290 |
| Water-soluble (meth)acrylic resin B | Monomer compositio n [% by mass] | MMA | 42.1 | 42.1 | 43.8 | 43.8 | 42.1 | 42.1 | 43.8 | 42.1 | 43.8 | 42.1 |
|  |  | n-BA | - | - | 14.3 | 14.3 | - | - | 14.3 | - | 14.3 | - |
|  |  | EA | 16.0 | 16.0 | - | - | 16.0 | 16.0 | - | 16.0 | - | 16.0 |
|  |  | AA | 20.0 | 20.0 | 20.0 | 20.0 | 20.0 | 20.0 | 20.0 | 20.0 | 20.0 | 20.0 |
|  |  | 2HEM A | 20.0 | 20.0 | 20.0 | 20.0 | 20.0 | 20.0 | 20.0 | 20.0 | 20.0 | 20.0 |
|  |  | NMA M | - | 1.9 | - | - | - | 1.9 | - | - | - | - |
|  |  | HEAA | 1.9 | - | 1.9 | 1.9 | 1.9 | - | 1.9 | 1.9 | 1.9 | 1.9 |
|  | Mw |  | 10200 | 10200 | 10700 | 10700 | 10200 | 10200 | 10700 | 10200 | 10700 | 10200 |
| Gel fraction of coating composition at 170°C [% by mass] |  |  | 20 | 10 | 10700 | 20 | 20 | 20 | 20 | 30 | 20 | 20 |
| Gel fraction of coating composition at 200°C [% by mass] |  |  | 50 | 40 | 50 | 50 | 50 | 50 | 60 | 60 | 50 | 50 |
| Mass ratio (A/B) |  |  | 90/10 | 90/10 | 90/10 | 95/5 | 90/10 | 90/10 | 90/10 | 90/10 | 85/15 | 90/10 |

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Evaluation | Coatability | | A | A | A | A | A | A | A | A | A | A |
| | Adhesive strength at a high temperature | Measured value [MPa] | 0.62 | 0.61 | 0.58 | 0.56 | 0.58 | 0.49 | 0.55 | 0.54 | 0.39 | 0.35 |
| | | Evaluation | AA | AA | A | A | A | A | A | A | B | B |
| | Pot life | Evaluation | A | A | A | A | A | A | A | A | A | A |

[Table 2]

| | | | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|---|
| (Meth)acrylic resin particles A | Monomer composition [% by mass] | n-BA | 13.6 | 13.6 | - | - | 15.6 | 13.6 | - | - | 10.3 | 13.8 | 9.1 |
| | | MMA | 42.4 | 42.4 | 40.6 | 40.6 | 72.5 | 42.4 | 40.6 | 40.6 | 54.7 | 44.0 | 52.8 |
| | | 2EHA | - | - | 15.4 | 15.4 | - | - | 15.4 | 15.4 | - | - | - |
| | | St | 32.1 | 32.1 | 32.1 | 32.1 | - | 32.1 | 32.1 | 32.1 | 32.1 | 32.1 | 32.1 |
| | | MAA | 10.0 | 10.0 | 10.0 | 10.0 | 10.0 | 10.0 | 10.0 | 10.0 | 1.0 | 10.0 | 1.0 |
| | | NMAM | 1.9 | - | - | - | - | - | - | - | - | - | - |
| | | NBMA | - | 1.9 | 1.9 | 1.9 | 1.9 | - | - | - | - | - | - |
| | | HEAA | - | - | - | - | - | 1.9 | 1.9 | 1.9 | 1.9 | 0.1 | - |
| | | GMA | - | - | - | - | - | - | - | - | - | - | 5.0 |
| | Tg [°C] | | 70 | 70 | 70 | 70 | 70 | 70 | 70 | 70 | 70 | 70 | 70 |
| | Average primary particle size [nm] | | 290 | 290 | 290 | 290 | 290 | 400 | 290 | 290 | 280 | 280 | 280 |
| Water-soluble (meth)acrylic resin B | Monomer composition [% by mass] | MMA | 42.1 | 42.1 | 57.2 | 43.8 | 42.1 | 42.1 | 50.7 | 23.1 | 42.1 | 42.1 | 42.1 |
| | | n-BA | - | - | - | - | - | - | 12.4 | 20.0 | - | - | - |
| | | EA | 16.0 | 16.0 | 20.9 | 16.2 | 16.0 | 16.0 | - | - | 16.0 | 16.0 | 16.0 |
| | | AA | 20.0 | 20.0 | 20.0 | 20.0 | 20.0 | 20.0 | 15.0 | 35.0 | 20.0 | 20.0 | 20.0 |
| | | 2HEMA | 20.0 | 20.0 | - | 20.0 | 20.0 | 20.0 | 20.0 | 20.0 | 20.0 | 20.0 | 20.0 |
| | | NMAM | - | - | - | - | - | - | - | - | - | - | - |
| | | HEAA | 1.9 | 1.9 | 1.9 | - | 1.9 | 1.9 | 1.9 | 1.9 | 1.9 | 1.9 | 1.9 |
| | Mw | | 10200 | 10200 | 10300 | 10700 | 10200 | 10200 | 10300 | 10100 | 10200 | 10200 | 10200 |
| Gel fraction of coating composition at 170°C [% by mass] | | | 30 | 20 | 20 | 20 | 20 | 20 | 20 | 20 | 10 | 10 | 10 |
| Gel fraction of coating composition at 200°C [% by mass] | | | 50 | 70 | 60 | 60 | 60 | 60 | 50 | 50 | 30 | 50 | 40 |
| Mass ratio (A/B) | | | 90/10 | 90/10 | 90/10 | 90/10 | 90/10 | 90/10 | 90/10 | 90/10 | 90/10 | 90/10 | 90/10 |

(continued)

| | | | Exam ple 11 | Exam ple 12 | Exam ple 13 | Exam ple 14 | Exam ple 15 | Exam ple 16 | Exam ple 17 | Exam ple 18 | Exam ple 19 | Exam ple 20 | Exam ple 21 |
|---|---|---|---|---|---|---|---|---|---|---|---|---|---|
| Evaluat ion | Coatability | | A | A | A | A | A | A | A | A | A | A | A |
| | Adhesive strength at a high temperature | Measured value [MPa] | 0.22 | 0.35 | 0.34 | 0.33 | 0.38 | 0.62 | 0.62 | 0.62 | 0.21 | 0.22 | 0.38 |
| | | Evaluation | B | B | B | B | B | AA | AA | AA | B | B | B |
| | Pot life | Evaluation | A | A | A | A | A | A | A | A | A | A | A |

EP 4 786 640 A1

[Table 3]

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| (Meth) acrylic resin particles A | Monomer composition [% by mass] | n-BA | 13.6 | - | 18.7 | 17.3 | 12.9 | 23.8 | 10.1 | 13.85 |
| | | MMA | 42.4 | - | 37.3 | 28.7 | 37.5 | 32.2 | 55.4 | 44.0 |
| | | 2EHA | - | - | - | - | - | - | - | - |
| | | St | 32.1 | - | 32.1 | 32.1 | 32.1 | 32.1 | 32.1 | 32.1 |
| | | MAA | 10.0 | - | 10.0 | 20.0 | 10.0 | 10.0 | 0.5 | 10.0 |
| | | NMAM | - | - | - | - | - | - | - | - |
| | | NBMA | - | - | - | - | - | - | - | - |
| | | HEAA | 1.9 | - | 1.9 | 1.9 | 7.5 | 1.9 | 1.9 | 0.05 |
| | Tg [°C] | | 70 | - | 60 | 60 | 60 | 50 | 70 | 70 |
| | Average primary particle size [nm] | | 290 | - | 280 | 290 | 290 | 290 | 280 | 280 |
| Water-soluble (meth) acrylic resin B | Monomer composition [% by mass] | MMA | - | 42.1 | 42.1 | 42.1 | 42.1 | 42.1 | 42.1 | 42.1 |
| | | n-BA | - | - | - | - | - | - | - | - |
| | | EA | - | 16.0 | 16.0 | 16.0 | 16.0 | 16.0 | 16.0 | 16.0 |
| | | AA | - | 20.0 | 20.0 | 20.0 | 20.0 | 20.0 | 20.0 | 20.0 |
| | | 2HEMA | - | 20.0 | 20.0 | 20.0 | 20.0 | 20.0 | 20.0 | 20.0 |
| | | NMAM | - | - | - | - | - | - | - | - |
| | | HEAA | - | 1.9 | 1.9 | 1.9 | 1.9 | 1.9 | 1.9 | 1.9 |
| | | HDDA | - | - | - | - | - | - | - | - |
| | | AAM | - | - | - | - | - | - | - | - |
| | Mw | | - | 10200 | 10200 | 10200 | 10200 | 10200 | 10200 | 10200 |
| Gel fraction of coating composition at 170°C [% by mass] | | | 20 | 80 | 20 | 30 | 30 | 20 | 10 | 10 |
| Gel fraction of coating composition at 200°C [% by mass] | | | 60 | 80 | 60 | 60 | 50 | 60 | 30 | 30 |
| Mass ratio (A/B) | | | 100/0 | 0/100 | 80/20 | 90/10 | 90/10 | 90/10 | 90/10 | 90/10 |

(continued)

| | | | Compar ative Exampl e 1 | Compar ative Exampl e 2 | Compar ative Exampl e 3 | Comparat ive Example 4 | Comparat ive Example 5 | Comparat ive Example 6 | Comparat ive Example 7 | Comparat ive Example 8 |
|---|---|---|---|---|---|---|---|---|---|---|
| Evalua tion | Coatability | | C | A | A | A | A | A | A | A |
| | Adhesive strength at a high temperature | Measured value [MPa] | 0.01 | 0.01 | 0.19 | 0.15 | 0.14 | 0.12 | 0.16 | 0.15 |
| | | Evaluation | C | C | C | C | C | C | C | C |
| | Pot life | Evaluation | A | A | A | A | A | A | A | A |

[Table 4]

| | | | Comparative Example 9 | Comparative Example 10 |
|---|---|---|---|---|
| (Meth)acrylic resin particles A | Monomer composition [% by mass] | n-BA | 18.7 | 18.7 |
| | | MMA | 37.3 | 37.3 |
| | | 2EHA | - | - |
| | | St | 32.1 | 32.1 |
| | | MAA | 10.0 | 10.0 |
| | | NMAM | - | - |
| | | NBMA | - | - |
| | | HEAA | 1.9 | 1.9 |
| | Tg [°C] | | 60 | 60 |
| | Average primary particle size [nm] | | 290 | 290 |
| Water-soluble (meth)acrylic resin B | Monomer composition [% by mass] | MMA | - | - |
| | | n-BA | - | - |
| | | EA | - | - |
| | | AA | - | - |
| | | 2HEMA | - | - |
| | | NMAM | - | - |
| | | HEAA | - | - |
| | | HDDA | - | - |
| | | AAM | - | - |
| | Mw | | - | - |
| Other (meth)acrylic resin particles C | Monomer composition [% by mass] | MMA | - | - |
| | | n-BA | 38.6 | 38.6 |
| | | EA | 58.0 | 58.0 |
| | | AA | 1.5 | 1.5 |
| | | 2HEMA | - | - |
| | | NMAM | 0.8 | 0.8 |
| | | HEAA | - | - |
| | | HDDA | 0.1 | 0.1 |
| | | AAM | 1.0 | 1.0 |
| | Tg [°C] | | -30 | -30 |
| | Average primary particle size [nm] | | 190 | 190 |
| Gel fraction of coating composition at 170°C [% by mass] | | | 20 | 20 |
| Gel fraction of coating composition at 200°C [% by mass] | | | 60 | 60 |
| Mass ratio | (A/B) | | 100/0 | 100/0 |
| | (A/C) | | 90/10 | 80/20 |

(continued)

|  |  |  | Comparative Example 9 | Comparative Example 10 |
|---|---|---|---|---|
| Evaluation | Coatability |  | C | A |
|  | Adhesive strength at a high temperature | Measured value [MPa] | 0.02 | 0.02 |
|  |  | Evaluation | C | C |
|  | Pot life | Evaluation | A | A |

The details of the respective monomers shown in Tables 1 to 4 are as follows.

< Monomers Having Self-Crosslinkable Group >

"NMAM": N-methylolacrylamide
"NBMA": N-butylolacrylamide
"GMA": glycidyl methacrylate

< Monomer Having Self-Crosslinkable Group and Hydroxyl Group >
"HEAA": hydroxyethyl acrylamide
< Monomers Having Carboxy Group >

"MAA": methacrylic acid
"AA": acrylic acid

< Monomer Having Hydroxyl Group >
"2HEMA": 2-hydroxyethyl methacrylate
< (Meth)acrylic Acid Alkyl Ester Monomers >

"n-BA": n-butyl acrylate
"MMA": methyl methacrylate
"2EHA": 2-ethylhexyl acrylate
"EA": ethyl acrylate

< Other Monomers >

"St": styrene
"HDDA": 1,6-hexandiol diacrylate
"AAM": acrylamide

In Tables 1 to 4, the symbols "-" shown in the cells in the rows of the monomer compositions mean that the monomers corresponding to the respective rows are not used.

In Tables 1 to 4, the numerical values shown in the cells in the rows of the monomer compositions are all the values in terms of the solid component.

The results shown in Tables 1 to 4 have revealed that the coating compositions according to the present disclosure have better coatability as compared to the coating compositions of Comparative Examples. It has also been revealed that the coating compositions according to the present disclosure are capable of forming a coating film that shows a high adhesive strength under high temperature conditions of 200°C. In addition, the results have revealed that the coating compositions according to the present disclosure have an excellent pot life.

The disclosure of Japanese Patent Application No. 2023-163623 filed on Sep. 26, 2023 is incorporated herein by reference in their entirety.

All publications, patent applications, and technical standards mentioned in the present specification are incorporated herein by reference to the same extent as if each individual publication, patent application, or technical standard was specifically and individually indicated to be incorporated by reference.

**Claims**

1. A coating composition for a laminated steel sheet, the composition comprising:

    (meth)acrylic resin particles A that contain from 1% by mass to less than 20% by mass of a constituent unit derived from a monomer having a carboxy group with respect to total constituent units of the (meth)acrylic resin particles A, and from 0.1% by mass to 7% by mass of a constituent unit derived from a monomer having a self-crosslinkable group with respect to the total constituent units, and that have a glass transition temperature of 55°C or higher; a water-soluble (meth)acrylic resin B; and
    water,
    wherein a ratio of a mass content of the (meth)acrylic resin particles A to a mass content of the water-soluble (meth)acrylic resin B is from 95/5 to 85/15.

2. The coating composition for a laminated steel sheet according to claim 1, wherein the water-soluble (meth)acrylic resin B contains a constituent unit derived from a monomer having a self-crosslinkable group.

3. The coating composition for a laminated steel sheet according to claim 1 or claim 2, wherein the water-soluble (meth) acrylic resin B contains a constituent unit derived from a monomer having a hydroxyl group.

4. The coating composition for a laminated steel sheet according to claim 1 or claim 2, wherein the (meth)acrylic resin particles A have an average primary particle size of from 250 nm to 450 nm.

5. The coating composition for a laminated steel sheet according to claim 1 or claim 2, wherein the monomer having a self-crosslinkable group in the (meth)acrylic resin particles A is at least one selected from the group consisting of N-methylolacrylamide (NMAM), N-butylolacrylamide (NBMA), hydroxyethyl acrylamide (HEAA), and glycidyl methacrylate (GMA).

6. The coating composition for a laminated steel sheet according to claim 1 or claim 2, wherein a content percentage of the constituent unit derived from a monomer having a self-crosslinkable group in the water-soluble (meth)acrylic resin B is from 0.1% by mass to 10.0% by mass with respect to total constituent units of the water-soluble (meth)acrylic resin B.

7. The coating composition for a laminated steel sheet according to claim 1 or claim 2, wherein a content percentage of a constituent unit derived from a monomer having a hydroxyl group in the water-soluble (meth)acrylic resin B is from 5% by mass to 30% by mass with respect to total constituent units of the water-soluble (meth)acrylic resin B.

## INTERNATIONAL SEARCH REPORT

| International application No. |
|---|
| **PCT/JP2024/034363** |

**A. CLASSIFICATION OF SUBJECT MATTER**

***C23C 26/00***(2006.01)i; ***C09D 5/02***(2006.01)i; ***C09D 133/00***(2006.01)i; ***C09D 133/14***(2006.01)i; *C21D 8/12*(2006.01)n; *H01F 1/147*(2006.01)n; *H01F 27/245*(2006.01)n; *H01F 41/02*(2006.01)n; *H02K 1/18*(2006.01)n

FI:  C23C26/00 A; C09D5/02; C09D133/00; C09D133/14; C21D8/12 A; H01F1/147 183; H01F27/245; H01F41/02 B; H02K1/18 B

According to International Patent Classification (IPC) or to both national classification and IPC

**B. FIELDS SEARCHED**

Minimum documentation searched (classification system followed by classification symbols)

C23C26/00; C09D5/02; C09D133/00; C09D133/14; C21D8/12; H01F1/147; H01F27/245; H01F41/02 ; H02K1/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 04-218677 A (NIPPON STEEL CORPORATION) 10 August 1992 (1992-08-10) | 1-7 |
| A | JP 03-240970 A (NIPPON STEEL CORPORATION) 28 October 1991 (1991-10-28) | 1-7 |
| A | JP 03-232976 A (NIPPON STEEL CORPORATION) 16 October 1991 (1991-10-16) | 1-7 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 December 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/034363**

| Patent document cited in search report | | | Publication date (day/month/year) | Patent family member(s) | Publication date (day/month/year) |
|---|---|---|---|---|---|
| JP | 04-218677 | A | 10 August 1992 | (Family: none) | |
| JP | 03-240970 | A | 28 October 1991 | (Family: none) | |
| JP | 03-232976 | A | 16 October 1991 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004070080 A

- JP 2023163623 A

**Non-patent literature cited in the description**

- **CHIKARA KAIDOU** ; **KAZUTOSHI TAKEDA** ; **TAKEAKI WAKISAKA** ; **MASATO MIZOGAMI**. Characteristics of Adhesive-Coating Non-oriented Electrical Steel Sheet Cores. *IEEJ Transactions on Industry Application*, 1999, vol. 119 (7), 1010-1015

- New Lectures on Experimental Chemistry 4, Basic Technology 3, Light (II). Maruzen Co., Ltd, 20 July 1976, 725-741